# EUROPÄISCHE PATENTSCHRIFT

(11) **EP 2 418 161 B1**
(45) Veröffentlichungstag und Bekanntmachung des Hinweises auf die Patenterteilung: **01.05.2013**
(21) Anmeldenummer: 11173041.2
(22) Anmeldetag: 07.07.2011
(51) Int. Cl.: B65G 35/06

(54) **System und Verfahren zum Fördern und Umlenken eines Lastträgers**
Method and system for conveying and redirecting a load bearer
Système et procédé de transport et de retournement d'un porte-charges

(30) Priorität: 08.07.2010 AT 11632010
(43) Veröffentlichungstag der Anmeldung: 15.02.2012
(73) Patentinhaber: STIWA Holding GmbH, 4800 Attnang-Puchheim (AT)
(72) Erfinder: Mersnik, Christian, 4800 Attnang-Puchheim (AT); Pucher, Christian, 4690 Pitzenberg (AT)
(74) Vertreter: Burger, Hannes

(56) Entgegenhaltungen:
- US-A- 3 603 262

## Beschreibung

Die Erfindung betrifft ein Fördersystem gemäß dem Oberbegriff des Patentanspruches 1 sowie ein Verfahren zum Antreiben und wahlweisen Positionieren eines Lastträgers gemäß dem Oberbegriff des Anspruches 16.

Bei automatischen Transport- oder Förderanlagen für Herstellungs-, Bearbeitungs- oder Messprozesse werden vielfach mit Werkstücken beladene Lastträger entlang von Förderbahnen automatisiert gefördert. Um die Lastträger mit den Werkstücken bestimmten Bearbeitungsmaschinen, Handarbeitsplätzen, Messstationen oder sonstigen Positionen zuführen zu können, ist die Förderbahn im Allgemeinen den örtlichen Gegebenheiten sowie an die geplanten Abläufe der Prozesse anzupassen. Eine wichtige Teilfunktion einer derartigen Transport-oder Förderanlage besteht darin die Förderrichtung eines Lastträgers durch entsprechende Ausbildung der Förderbahn zu verändern, indem mit der Förderbahn Richtungsänderungen der Lastträger, etwa durch Umlenken erfolgen.

Solche Umlenkstationen sind bei so genannten Linearmontagesystemen oder Transfersystemen häufig im Einsatz und werden unter anderem auch Eckumlenkungen genannt, wobei Umlenkwinkel von 180° und 90° am häufigsten eingesetzt werden. Häufig werden dabei gerade Förderbahnabschnitte auch mittels gekrümmter Förderbahnabschnitte verbunden, wodurch die Lastträger die erforderliche Richtungsänderung zwischen den Förderbahnabschnitten erfahren. Eine derartige gattungsgemäße Umlenkstation ist z.B. aus US 3,603,262 bekannt.

In den geraden Förderbahnabschnitten werden die Lastträger im Allgemeinen formschlüssig mittels ortsfesten Ketten, Zahnriemen oder Zahnrädern angetrieben, die in Gegenelemente an den Lastträgern eingreifen, und können die einzelnen Bearbeitungsstationen mit hoher Genauigkeit angefahren werden, wobei diese Fördervorgänge mit hohen Beschleunigungen und Verzögerungen ausgeführt werden können, wodurch auch hohe Fördergeschwindigkeiten erreicht werden können und ein hoher Durchsatz an Lastträgern pro Zeiteinheit möglich ist.

Für den Antrieb in den Umlenkstationen werden im Stand der Technik dabei häufig scheibenförmige Antriebsorgane eingesetzt, die die Lastträger innerhalb des Umlenkbereichs mit Reibschluss antreiben. Der Nachteil derartiger Systeme besteht darin, dass aufgrund der lediglich reibschlüssigen Verbindung zwischen dem Antriebsorgan und dem Lastträger keine definierte Position des Lastträgers im Umlenkabschnitt zur Verfügung steht bzw. aus der Stellung des Antriebsorgans nicht eindeutig auf die Position des Lastträgers geschlossen werden kann. Derartige Systeme erfordern deshalb zusätzliche Maßnahmen, am Ende eines derartigen Umlenkabschnittes die genaue Position des Lastträgers wieder zu erfassen und dessen Bewegung mit nachfolgenden, formschlüssigen Fördersystemen wieder zu synchronisieren. Dies erfordert beispielsweise einen Mehraufwand an Positionssensoren in Form von Lichtschranken oder sonstigen zur Positionserfassung geeigneten Mitteln.

Ein derartiges Fördersystem ist beispielsweise aus WO 92/04259 A1 bekannt.

Eine weitere Ausführungsform einer Umlenkstation ist aus WO 2008/019410 A1 der Anmelderin bekannt. Bei dem darin beschriebenen Fördersystem werden Teileträger, die auch Lastträger darstellen, in die Ecke einer Führungsbahn gefördert und aus dieser Ecke mit geänderter Förderrichtung jedoch ohne Änderung der Orientierung des Teileträgers wieder hinausgefördert, wobei ein Teileträger in der Umlenkstation mittels einer Drehscheibe angetrieben wird, die mit darauf ausgebildeten Führungsbahnen formschlüssig auf ein Führungsorgan des Teileträgers einwirkt. Durch die Ausführung einer derartigen Umlenkstation in Form einer Ecke, sind bei höheren Fördergeschwindigkeiten in den vor- und nachgelagerten geraden Förderabschnitten im Bereich der Umlenkecke jedenfalls hohe Verzögerungen bzw. Beschleunigungen nötig und daher erfordert eine derartige Umlenkstation bei hohen Anforderungen an die Dynamik entsprechend leistungsfähige Antriebsmotoren. Das Vorsehen mehrerer solcher Drehscheiben, die jeweils auf ein Führungsorgan des Teileträgers antreibend einwirken, benötigt in Zusammenhang mit den erforderlichen, relativ abrupten Bewegungsänderungen mehrere Antriebe mit hohen Leistungen und müssen diese präzise zueinander gekoppelt sein, damit ungestörte Bewegungsabläufe in den Umlenkstationen erzielt werden.
Die Aufgabe der Erfindung besteht darin, ein Fördersystem bereitzustellen, in dem das Umlenken von Lastträgern baulich einfach und auf möglichst sanfte und wenig abrupte Weise erfolgen kann und dabei eine möglichst gute Kontrolle über die Position und den Bewegungsablauf eines derart umgelenkten Lastträgers gegeben ist.

Die Aufgabe der Erfindung wird durch ein Fördersystem gemäß dem Patentanspruch 1 und ein Verfahren gemäß Patentanspruch 16 gelöst. Dadurch, dass im Umlenkabschnitt mit einer kreisbogenförmigen Bahnkurve gleichzeitig zwei Führungselemente des Lastträgers formschlüssig mit Führungsflächen eines Antriebsorgans im Eingriff stehen, befindet sich der Lastträger im Umlenkabschnitt immer in einer exakt definierten Position bezüglich des Antriebsorgans und kann mit höherer Genauigkeit aus dessen Drehwinkel unmittelbar auf die Position des Lastträgers im Umlenkabschnitt rückgeschlossen werden, als wenn ein Eingriff nur an einem Führungselement erfolgt. Weiters besteht durch die beiden voneinander distanzierten und von den Führungsflächen des Antriebsorgans angetriebenen, inneren Führungselemente die Möglichkeit, den Lastträger mittels des vorderen, inneren Führungselements bereits vor dem Umlenkabschnitt vom Antriebsorgan zu erfassen bzw. mittels des hinteren, inneren Führungselements nach dem Umlenkabschnitt noch über das Antriebsorgan auf den Lastträger einzuwirken und diesen bis in einen nachfolgenden Führungsbahnabschnitt hinein anzutreiben.

Der Lastträger ist dadurch nicht nur unmittelbar im Umlenkabschnitt sondern auch davor und danach zumindest über kurze Strecken in Eingriff mit dem Antriebsorgan. Dadurch dass die Führungsflächen am Antriebsorgan auf die voneinander distanzierten, inneren Führungselemente des Lastträgers einwirken, ist die Führung des Lastträgers im Umlenkabschnitt wesentlich präziser, da durch die größere Distanz zwischen den Berührpunkten bzw. Stützpunkten bei gleichem Funktionsspiel zwischen Lastträger und Führungsbahn seitliche Versetzungen oder Verdrehungen des Lastträgers wesentlich kleiner ausfallen. Dadurch, dass beide Führungsflächen an einem Antriebsorgan angeordnet sind, sind diese dauerhaft in genau definierter Position zueinander und können die beiden inneren Führungselemente des Lastträgers exakter geführt werden, als wenn diese jeweils mit eigenen Antriebsorganen geführt werden.

Ein wesentlicher, weiterer Vorteil eines erfindungsgemäßen Fördersystems besteht darin, dass durch die volle Kontrolle über die Position des Lastträgers im Umlenkabschnitt in diesem auch die Anordnung von Bearbeitungsstationen, die eine hohe Positioniergenauigkeit erfordern, möglich ist. So können beispielsweise im Bereich des Umlenkabschnittes Montageautomaten angeordnet werden, denen auf den Lastträgern die Montageobjekte positionsgenau zugeführt werden.

Die Ausführung eines Fördersystems gemäß Anspruch 2 ist von Vorteil, da dadurch eine sogenannte Doppelführung der Führungselemente vermieden ist, bei der ein Führungselement, das in vielen Fällen durch eine Führungsrolle gebildet ist, mit kleinem Funktionsspiel zwischen zwei Führungsflächen hindurch bewegt wird. Bei einer derartigen Doppelführung kommt ein auf der einen Führungsfläche abrollendes Führungselement durch seitliche Versetzbewegungen immer wieder in Kontakt mit der gegenüberliegenden Führungsfläche, wobei dabei seine Drehrichtung gewechselt wird bzw. zumindest die Drehbewegung aufgrund der entgegen der Drehrichtung wirkenden Reibung gestört wird, wobei hohe Gleitgeschwindigkeiten und dadurch hoher Verschleiß sowohl an Führungselementen als auch an den Führungsflächen auftreten kann. Durch eine derartige Ausführung ist sichergestellt, dass die äußeren Führungselemente im kreisbogenförmigen Umlenkabschnitt nur auf der äußeren, feststehenden Führungsfläche abrollen können, nicht jedoch aufgrund einer Doppelführung auf eine innere gegenüberliegende Führungsfläche wechseln können und somit ein Führungselement nicht ständig zwischen zwei diesem zugeordneten gegenüberliegenden Führungsflächen wechselt. Die Führungsflächen am Antriebsorgan führen die inneren Führungselemente in dieser Ausführungsform nicht nur in Umfangsrichtung sondern auch in radialer Richtung, also in Bezug auf ihren Abstand zur Drehachse hin und sind dazu so orientiert, dass im Umlenkabschnitt keines der beiden äußeren Führungselemente von der äußeren, feststehenden Führungsfläche, als auch keines der beiden inneren Führungselemente von den Führungsflächen am Antriebsorgan über ein übliches geringes Funktionsspiel, etwa von Bruchteilen eines Millimeters, hinaus abheben kann, wodurch der Lastträger in seiner Position relativ zum Antriebsorgan fixiert ist.

Eine weitere Erhöhung der Führungsgenauigkeit wird bei einer Ausführung des Fördersystems gemäß Anspruch 3 erzielt, da dadurch die inneren Führungselemente des Lastträgers beim Eingriff in das Antriebsorgan jeweils zwischen zwei Führungsflächen einer Führungsnut geführt sind und dadurch Relativbewegungen zwischen dem Lastträger und dem Antriebsorgan im Umlenkabschnitt reduziert werden. Weiters ist durch die Ausbildung mit Führungsnuten mit gegenüberliegenden Führungsflächen eine Umkehrung der Antriebsrichtung des Antriebsorgans und damit der Förderrichtung eines Lastträgers möglich, wodurch die Einsatzmöglichkeiten für ein derartiges Fördersystem erweitert werden. Das Problem einer Doppelführung durch die gegenüberliegenden Führungsflächen einer Führungsnut ist bei den inneren Führungselementen des Lastträgers nicht oder nur in sehr geringem Ausmaß gegeben, da durch die Angleichung der Bewegung des Antriebsorgans an die Bewegung des Lastträgers nur sehr geringe Relativgeschwindigkeiten zwischen den inneren Führungselementen und den Führungsflächen am Antriebsorgan auftreten und dadurch die Gefahr eines vorzeitigen Verschleißens relativ gering ist.

Damit ein Eingriff zwischen den inneren Führungselementen und den Führungsflächen am Antriebsorgan hergestellt werden kann, ist es notwendig, dass die inneren Führungselemente auf ihrer Bewegungsbahn in den Bewegungsraum des Antriebsorgans eintreten und anschließend wieder aus diesem austreten, wobei zur Erleichterung dieses Eintretens die Führungsnuten am Außenumfang des Antriebsorgans Abschrägungen oder Abrundungen aufweisen können, die das Eintreten der inneren Führungselemente in die Führungsnuten im Fall von geringfügigen Positionsabweichungen erleichtern können. Als Einkoppelungspunkt bzw. Auskoppelungspunkt können in diesem Zusammenhang die Schnittpunkte der jeweiligen Bahnkurve der inneren Bewegungselemente mit dem Außenumfang des scheibenförmigen Antriebsorgans definiert werden.

Vor und nach dem Umlenkabschnitt, in dem der Lastträger zusammen mit dem Antriebsorgan eine reine Drehbewegung um die Drehachse ausführt, können insbesondere im Einlaufabschnitt vor dem Umlenkabschnitt und im Auslaufabschnitt nach dem Umlenkabschnitt Doppelführungen für die äußeren Führungselemente vorgesehen sein, die die präzise Führung des Lastträgers quer zu seiner vorgesehenen Bewegungsbahn sicherstellen, solange sich noch nicht beide inneren Führungselemente im Eingriff am Antriebsorgan befinden und noch eine Relativbewegung zwischen Lastträger und Antriebsorgan stattfindet.

Der Verlauf der Führungsnuten auf dem Antriebsorgan hängt unmittelbar mit der Relativgeschwindigkeit zwischen Lastträger und Antriebsorgan zusammen, wobei unterschiedliche Anforderungen auch unterschiedliche Formen der Führungsnuten bedingen können.

Eine einfache Form der Führungsnut wird bei einer Ausführung gemäß Anspruch 4 erzielt, wonach die inneren Führungselemente vor dem Umlenkabschnitt in die Führungsnuten eintreten, im Umlenkabschnitt ohne Relativbewegung in diesen verweilen und nach dem Umlenkabschnitt wieder in umgekehrter Richtung aus den Führungsnuten austreten. Die Führungsnuten werden dadurch im Wesentlichen in zwei Richtungen durchlaufen.

Eine vorteilhafte, alternative Ausführungsform ist gemäß Anspruch 5 gegeben, wenn bei einer Führungsnut Einkoppelungspunkt und Auskoppelungspunkt eines Führungselements voneinander distanziert sind. Die Führungsnut dazwischen besitzt vorzugsweise einen stetigen Verlauf und wird von dem darin geführten, inneren Führungselement im Wesentlichen in einer Richtung durchlaufen. Dadurch besteht eine geringere Gefahr von örtlichem Verschleiß an den Führungsflächen des Antriebsorgans, da Eintreten in die Führungsnut und Austreten aus der Führungsnut nicht an denselben Führungsflächen erfolgt.

Für einen möglichst sanften Übergang der Lastträger in den Umlenkabschnitt und aus diesem heraus, ist es von Vorteil, wenn ein Fördersystem nach Anspruch 6 ausgeführt ist, wonach am Umlenkabschnitt gerade und tangential verlaufende Führungsbahnabschnitte vorgeordnet und/oder nachgeordnet sind. Die Einleitung der Richtungswechsel erfolgt dadurch weitgehend stoßfrei und sind die Führungselemente, z.B. Wälzlager von Führungsrollen geringerem Verschleiß ausgesetzt.

Um bei einem erfindungsgemäßen Fördersystem über den gesamten Förderweg eine durchgängige Kontrolle über die Position von Lastträgern zu erzielen, kann das Fördersystem vorzugsweise nach Anspruch 7 ausgebildet sein. Im Einlaufbereich und dem Auslaufbereich des Umlenkabschnitts überschneiden sich dadurch in diesen Bereichen angeordnete Antriebe mit dem Antrieb im Umlenkabschnitt und sind die Lastträger durchgängig in formschlüssigem Eingriff mit entsprechenden Antriebselementen weshalb aus deren Stellung präzise auf die Position des Lastträgers geschlossen werden kann bzw. kann ein Lastträger mit hoher Genauigkeit an bestimmte Stellen der Führungsbahn positioniert werden. Eine Kombination aus geradlinigen Führungsbahnabschnitten, die mit Umlenkabschnitten tangential verbunden sind, erfordert wesentlich geringere Leistungen zum Abbremsen oder Beschleunigen von Lastträgern als Führungsbahnen mit scharfen Ecken in denen Lastträger abrupt abgebremst werden müssen und nach Durchführung eines Richtungswechsels wieder stark beschleunigt werden. Eine Ausführung des Fördersystems gemäß Anspruch 8 stellt eine einfache Geometrie der Führungsbahnen sicher, die auch bei aus dem Stand der Technik bekannten Fördersystemen bewährt ist und gleichzeitig hochbelastbare und spielarme Führungen darstellen. Insbesondere bei einer quadratischen Anordnung der Führungselemente können diese auch bei Fördersystemen mit rechtwinkeligen Abzweigungen entlang der Führungsbahnen eingesetzt werden wobei die Spurweite aller Führungsbahnabschnitte konstant bleiben kann.

Eine verschleißarme und trotzdem präzise Führung der Lastträger ist bei einem Fördersystem gemäß Anspruch 9 gegeben, wodurch ebenfalls das zuvor beschriebene Problem von Doppelführungen der Führungselemente weitgehend vermieden ist.

Eine Ausführung des Fördersystems gemäß Anspruch 10 stellt sicher, dass die inneren Führungselemente ausreichend weit in das Antriebsorgan bzw. die darauf angeordneten Führungsflächen oder Führungsnuten eingreifen und die Führung und der Antrieb des Lastträgers im Umlenkabschnitt und darüber hinaus gesichert ist.

Bei einer Ausführung des Fördersystems gemäß Anspruch 11 ist unabhängig von einem frei wählbarem Geschwindigkeitsverlauf des Lastträgers in der Umlenkstation ein sanftes und ruckfreies Ein- bzw. Auskoppeln des Lastträgers am Antriebsorgan und eine exakte Positionierung an beliebiger Position entlang des Förderwegs möglich.

Eine symmetrische Anordnung bzw. Ausführung der Führungsflächen oder Führungsnuten am Antriebsorgan gemäß Anspruch 12 bewirkt zusammen mit der symmetrischen Anordnung der inneren Führungselemente, dass die Auskoppelungsbewegung bzw. Auslaufbewegung im Wesentlichen gegengleich zur Einkoppelungsbewegung bzw. Einlaufbewegung erfolgt und dadurch auch eine Umkehr der Förderrichtung unproblematisch erfolgen kann.

Eine gleichmäßige Führung der Lastträger durch den Umlenkabschnitt wird bei einer Ausführung des Fördersystems gemäß Anspruch 13 erzielt, wobei die Antriebsgeschwindigkeit des bewegten Antriebsorgans passend zur Fördergeschwindigkeit der Lastträger gewählt wird und damit die Form der Führungsflächen bzw. der Verlauf der Führungsnuten vorgegeben ist.

Durch eine Ausführung des Fördersystems gemäß Anspruch 14 ist sichergestellt, dass ein Lastträger während des Eingriffs des Antriebsorgans beim Umlenkvorgang zumindest an einem seiner beiden inneren Führungselemente formschlüssig angetrieben wird und dadurch auch vermieden wird, dass der Lastträger bei seiner Bewegung entlang der äußeren Führungsfläche nicht zwischen dieser und den Führungsflächen am Antriebsorgan eingeklemmt werden kann und der Lastträger durch einen flachen Verlauf der Führungsfläche annähernd parallel zur Bewegungsbahn der inneren Führungselemente gewissermaßen zwischen Antriebsorgan und äußerer Führungsfläche durch Selbsthemmung eingekeilt werden kann.

Eine Ausführung gemäß Anspruch 15 ergibt baulich einfache Lösungen für die Führungsflächen bzw. die Führungsnuten, wodurch im Umlenkabschnitt einerseits eine präzise Führung der beiden inneren Führungselemente sowohl in Förderrichtung als auch quer dazu erzielt wird und andererseits an diese viertelkreisförmigen Teilabschnitte die für ein sanftes Einkuppeln bzw. sanftes Auskuppeln erforderliche Abschnitte der Führungsfläche bzw. der Führungsnuten angeschlossen werden können.

Das Verfahren gemäß Anspruch 17 bewirkt dieselben vorteilhaften Effekte wie ein Fördersystem gemäß Anspruch 6.

Die Maßnahmen gemäß der Verfahrensvariante in Anspruch 18 bewirken eine durchgehende Kontrolle über die exakte Position des Lastträgers vor, während und nach dem Umlenkabschnitt wodurch keine zusätzlichen Maßnahmen zur Positionserfassung oder Synchronisierung mit nachfolgenden Antriebsorganen erforderlich sind.

Geringe Tangentialbeschleunigungen und daher geringe Antriebsleistungen und Bremsleistungen sind gegeben, wenn das Verfahren gemäß Anspruch 19 durchgeführt wird. Bei einer idealen, reibungsarmen Führungsbahn wird dabei für das Durchschleusen der Lastträger durch den Umlenkabschnitt nur eine vernachlässigbar geringe Antriebsenergie benötigt, weshalb auch mit einem kleinen Antriebsmotor für das Antriebsorgan das Auslangen gefunden werden kann. Die aufgrund der Richtungsänderungen erforderlichen Beschleunigungen quer zur Bahnkurve des Lastträgers erfordern keine Energiezufuhr und sind bei reibungsarmer Ausführung der Führungsbahn nur von geringem Ausmaß, da die Richtungsänderung im Wesentlichen durch das Abrollen des Lastträgers an der äußeren Führungsfläche stattfindet. Ein sanftes Einkoppeln und Auskoppeln des Lastträgers am Antriebsorgan wird durch die Ausführung des Verfahrens nach Anspruch 20 bewirkt, wodurch auch die Form der Führungsfläche am Antriebsorgan derart ausfällt, dass diese Führungsfläche bzw. die Führungsnut von einem Führungselement nur in einer Richtung durchlaufen wird und dadurch Verschleißerscheinungen an den Führungsflächen geringer ausfallen.

Die Durchführung des Verfahrens gemäß Anspruch 21 bewirkt, dass die Führungsflächen bzw. Führungsnuten am Antriebsorgan spiegelsymmetrisch bezüglich einer durch die Drehachse verlaufenden Bezugsebene ausgebildet sind und durch die spiegelbildliche Ausführung gleiche Bauteile zur Bildung der Führungsflächen am Antriebsorgan verwendet werden können. Die Ausbildung der äußeren Führungsfläche als Kreisbogen bewirkt ein sanftes Umlenken des Lastträgers und es kann der Winkel zwischen tangential an den Umlenkabschnitt anschließenden Führungsbahnabschnitten weitgehend frei gewählt werden, wodurch eine derartige Umlenkstation sehr flexibel einsetzbar ist.

Die Weiterbildung des Verfahrens gemäß Anspruch 22 bewirkt zum Einen, dass die mit dem Lastträger geförderten Gegenstände oder Materialien möglichst sanft gefördert werden, also möglichst geringen Beschleunigungen ausgesetzt werden und zum Anderen, dass die Lastträger den Umlenkabschnitt mit annähernd konstanter Fahrt durchlaufen, wodurch, wie bereits zuvor erwähnt, nur geringe Antriebsleistungen erforderlich sind.

Zum besseren Verständnis der Erfindung wird diese anhand der nachfolgenden Figuren näher erläutert.

Es zeigen jeweils in stark schematisch vereinfachter Darstellung:
- Fig. 1: eine Draufsicht auf ein erfindungsgemäßes Fördersystem im Bereich des Umlenkabschnitts;
- Fig. 2: eine Ansicht einer Umlenkstation für ein erfindungsgemäßes Fördersystems;
- Fig. 3: eine Draufsicht auf eine Umlenkstation gemäß Fig. 2 am Beginn des Einkoppelungsvorganges eines Lastträgers unmittelbar vor dem Einkoppeln des vorderen inneren Führungselements am Antriebsorgan;
- Fig. 4: eine Draufsicht auf eine Umlenkstation gemäß Fig. 2 während des Einkoppelungsvorganges eines Lastträgers beim Einkoppeln des hinteren inneren Führungselements am Antriebsorgan;
- Fig. 5: eine Draufsicht auf eine Umlenkstation gemäß Fig. 2 am Ende des Einkoppelungsvorganges eines Lastträgers;
- Fig. 6: eine Draufsicht auf eine Umlenkstation gemäß Fig. 2 mit einer weiteren Ausführungsform der Führungsnuten nach dem Einkoppelungsvorgang eines Lastträgers;
- Fig. 7: ein Diagramm mit möglichen Geschwindigkeitsverläufen für das Antriebsorgan.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

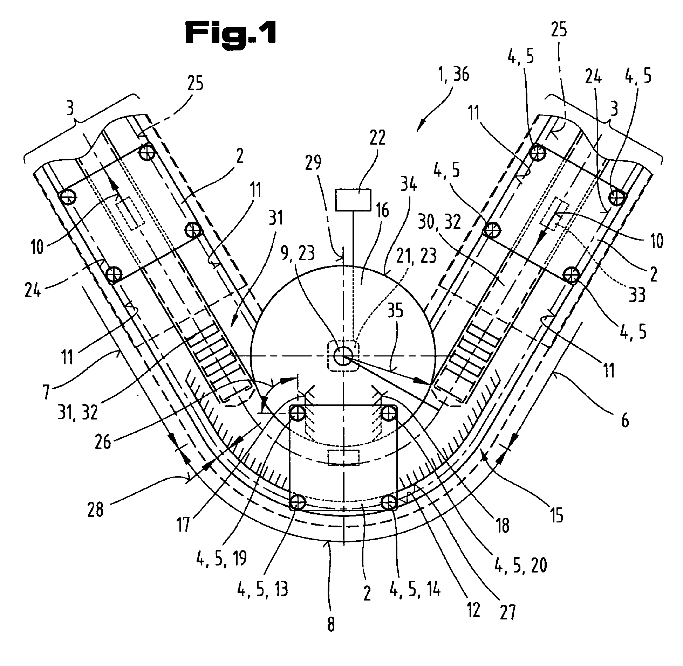

Fig. 1 zeigt eine ausschnittsweise Draufsicht auf ein Fördersystem 1, mit dem Lastträger 2 entlang einer Führungsbahn 3 bewegt bzw. transportiert werden können. In Fig. 1 sind drei Lastträger 2 in drei unterschiedlichen Positionen dargestellt, wobei dies entweder so aufgefasst werden kann, dass es sich dabei um drei Positionen handelt, an denen sich ein konkreter Lastträger 2 zu aufeinander folgenden Zeitpunkten befindet, oder als Momentanaufnahme von drei unterschiedlichen mit dem Fördersystem 1 transportierten Lastträgern 2.

Das Fördersystem 1 dient dazu, Lastträger 2 mit gegebenenfalls darauf angeordneten Lasten, Gegenständen oder Objekten zu definierten Positionen zu bewegen, an denen beispielsweise Montagevorgänge oder Prüfvorgänge oder sonstige Tätigkeiten an den transportierten Lasten erfolgen können. Da zur Durchführung derartiger Vorgänge eine hohe Positioniergenauigkeit erforderlich ist, umfasst das Fördersystem 1 entsprechende Führungen oder Führungsbahnen, entlang denen die Lastträger 2 entlang von definierten Bahnkurven oder Bewegungsbahnen bewegt werden können. Dies erfordert insbesondere, dass die Lastträger keine undefinierten Bewegungen quer zur vorgesehenen Bewegungsbahn ausführen. Ein Lastträger 2 umfasst dazu Führungselemente 4, die mit der Führungsbahn 3 zusammenwirken und einen Freiheitsgrad des Lastträgers 2 nur entlang der vorgesehenen Bewegungsbahn zulassen. Die Führungselemente 4 sind vorzugsweise in quadratischer Anordnung an den Eckbereichen eines Lastträger 2 mit quadratischer Grundform angeordnet und zur Verringerung von Reibung vorzugsweise als Führungsrollen 5 ausgeführt, die am Lastträger 2 drehbar gelagert sind und an der Führungsbahn 3 abwälzen können.

In Fig. 1 ist der Einfachheit halber die Führung des Lastträgers 2 nur in der Ebene der Führungsbahn 3, die der Zeichnungsebene entspricht, mittels den Führungsrollen 5 dargestellt, die Führung rechtwinkelig zur Ebene der Führungsbahn 3 kann dabei durch entsprechende Ausbildung der Führungsbahn 3 und der Führungsrollen 5 erfolgen oder aber auch durch sonstige, davon unabhängige Führungsmittel.

Die Bewegungsbahn der Lastträger 2 kann durch entsprechende Ausformung der Führungsbahn 3 willkürlich und beliebig verlaufen, im Beispiel gemäß Fig. 1 weist das Fördersystem 1 geradlinige Führungsbahnabschnitte 6, 7 auf, die mit einem Umlenkabschnitt 8 miteinander verbunden sind. Der Umlenkabschnitt 8 verläuft dabei kreisbogenförmig um eine Drehachse 9, die in Fig. 1 rechtwinkelig zur Zeichnungsebene verläuft. Beim Fördersystem 1 durchläuft ein Werkstückträger 2 in Förderrichtung 10 nacheinander den ersten geradlinigen und vorgeordneten Führungsbahnabschnitt 6, anschließend den kreisbogenförmigen Umlenkabschnitt 8 und in Folge den daran anschließenden zweiten nachfolgenden geraden Führungsbahnabschnitt 7, wobei der Lastträger 2 nicht nur seine Bewegungsrichtung ändert, sondern auch seine Orientierung oder Ausrichtung im Umlenkabschnitt 8 verändert wird.

In den geradlinigen Führungsbahnabschnitten 6 und 7 wird ein Lastträger 2 von geradlinig verlaufenden Führungsflächen 11 geführt, an denen die Führungsrollen 5 abwälzen, während er im Umlenkabschnitt 8 von einer kreisförmig verlaufenden Führungsfläche 12 mit zwei voneinander beabstandeten, äußeren Führungselementen 4, hier in Form von Führungsrollen 5 geführt ist. In Fig. 1 ist dabei das vordere, äußere Führungselement 4 als Führungselement 13 bezeichnet und das hintere, äußere Führungselement 4 als Führungselement 14 bezeichnet. Da diese beiden Führungselemente 13 und 14 zueinander einen fixen Abstand aufweisen und im Umlenkabschnitt 8 nacheinander dieselbe kreisbogenförmige Bahnkurve durchlaufen, führt der Lastträger 2 im Umlenkabschnitt 8 eine reine Rotationsbewegung bezüglich der Drehachse 9 aus. Die in Förderrichtung 10 gesehen linke, geradlinige Führungsfläche 11 des ersten Führungsbahnabschnittes 6 geht in einem Anschlusspunkt 15 tangential in die kreisbogenförmige Führungsfläche 12 über, wodurch eine sanfte Umlenkung des Lastträgers 2 beim Übergang vom ersten Führungsbahnabschnitt 6 in den Umlenkabschnitt 8 erfolgt.

Im Umlenkabschnitt 8 wird der Lastträger 2 mit einem Antriebsorgan 16 angetrieben, das um die Drehachse 9, die auch die Krümmungsachse der Führungsfläche 12 darstellt, schwenkbar oder drehbar gelagert ist. Das Antriebsorgan 16 weist zwei voneinander beabstandete Führungsflächen 17 und 18 auf, die im Umlenkabschnitt 8 mit zwei voneinander beabstandeten und gegenüber den äußeren Führungselementen 13, 14 näher zur Drehachse 9 angeordneten, inneren Führungselementen 4, hier in Form von Führungsrollen 5 in formschlüssigem und antreibendem Eingriff stehen. In Fig. 1 ist dabei das vordere, innere Führungselement 4 als Führungselement 19 gekennzeichnet und das hintere, innere Führungselement 4 als Führungselement 20 gekennzeichnet.

Das Antriebsorgan 16 ist im dargestellten Ausführungsbeispiel gemäß Fig. 1 scheibenförmig ausgebildet und kann auch als Antriebsscheibe oder Drehscheibe bezeichnet werden und ist entweder direkt oder über ein Getriebe mit einem Antriebsmotor 21 gekoppelt, der seinerseits mit einer Steuerungsvorrichtung 22 des Fördersystems 1 verbunden ist.

Im Umlenkabschnitt 8 kontaktieren die inneren Führungselemente 19 und 20 im Wesentlichen spielfrei die beiden Führungsflächen 17 und 18 am Umlenkorgan 16 und sind Relativbewegungen zwischen dem Lastträger 2 und dem Antriebsorgan 16 durch die Orientierung dieser Führungsflächen 17 und 18 begrenzt. Im Ausführungsbeispiel gemäß Fig. 1 sind die Führungsflächen 17 und 18 nur ausschnittsweise dargestellt und etwa parallel zu einer durch die Drehachse 9 verlaufenden Symmetrieebene zwischen den inneren Führungselementen 19 und 20 orientiert und zwischen diesen angeordnet, wodurch eine Bewegung des Lastträgers 2 in Förderrichtung 10 oder in dazu umgekehrter Förderrichtung nur gemeinsam mit einer entsprechenden Bewegung des Antriebsorgans 16 erfolgen kann. Das Antriebsorgan 16 und der Lastträger 2 sind somit im Umlenkabschnitt 8 miteinander gekoppelt und ist der Lastträger 2 über die zwei inneren Führungselemente 19 und 20 formschlüssig und antreibend mit den Führungsflächen 17 und 18 des Antriebsorgans 16 im Eingriff.

Dadurch, dass der Lastträger 2 durch die äußeren Führungselemente 13 und 14, die entlang der äußeren, feststehenden und kreisbogenförmig gekrümmten Führungsfläche 12 geführt sind, eine reine Rotationsbewegung bezüglich der Drehachse 9 ausführt, die auch die Drehachse für die Bewegung des Antriebselements 16 ist, findet im Umlenkabschnitt 8 zwischen dem Lastträger 2 und dem Antriebsorgan 16 keine Relativbewegung statt und verhalten sich diese in Förderrichtung 10 gesehen, wie ein einziger, starrer Körper.

Dadurch ist im Umlenkabschnitt 8 ein steuerbarer Antrieb für einen Lastträger 2 gegeben, der aufgrund der weitgehend spielfreien und formschlüssigen Kopplung mit dem Antriebsorgan 16 auch zur Positionierung des Lastträgers 2 im Umlenkabschnitt 8 eingesetzt werden kann und über die Steuervorrichtung 22 eine programmierbare Achse 23 zur gesteuerten Bewegung und Positionierung des Lastträgers 2 bildet, die mit der Drehachse 9 zusammenfällt. Der Antriebsmotor 21 kann insbesondere als Servomotor oder Schrittmotor ausgebildet sein, weiters ist beispielsweise das Antriebsorgan 16 mit einem Drehgeber ausgestattet, wodurch jeweils auch die aktuelle Position der Führungsflächen 17, 18 und dadurch auch die aktuelle Position eines mit diesen in Eingriff befindlichen Lastträgers 2 bekannt ist. Dadurch können an einer derartigen Umlenkstation im Gegensatz zum Stand der Technik, bei dem der Antrieb eines Lastträgers im Umlenkabschnitt durch Reibschluss stattfindet und dadurch keine exakte Kontrolle über die Position des Lastträgers möglich ist, an einer derartigen Umlenkstation auch Arbeitsstationen angeordnet werden, da ein Lastträger 2 auch im Umlenkabschnitt 8 mit hoher Genauigkeit an definierte Positionen gefahren werden kann.

In Fig. 1 sind zur Verdeutlichung des Bewegungsablaufes eines Lastträgers 2 noch die Bewegungsbahn 24 der Mittelpunkte der äußeren Führungselemente 13 und 14 dargestellt sowie die Bewegungsbahn 25 der Mittelpunkte der inneren Führungselemente 19 und 20, wobei an dieser Stelle angemerkt sei, dass im Übergangsbereich vom geradlinigen Führungsbahnabschnitt 6 in den Umlenkabschnitt 8 bzw. vom Umlenkabschnitt 8 in den geradlinigen Führungsbahnabschnitt 7 sich die Bewegungsbahnen der beiden inneren Führungselemente 19 und 20 nicht exakt decken, da hier ein Übergang von einer reinen Translation in eine reine Rotation stattfindet und dieser Übergang beim vorderen, inneren Führungselement 19 geringfügig anders erfolgt als beim hinteren, inneren Führungselement 20.

Im Ausführungsbeispiel gemäß Fig. 1 verläuft im Kontaktpunkt zwischen dem vorderen, inneren Führungselement 19 und der vorderen Führungsfläche 17 die Führungsfläche 17 in einem Winkel 26 zur Bewegungsbahn 25 des vorderen inneren Führungselements 19 von etwa 60°. Beim hinteren, inneren Führungselement 20 und der hinteren Führungsfläche 18 am Antriebsorgan 16 ist dieser Winkel etwa gleich groß.

Beim Antrieb des Lastträgers 2 in Förderrichtung 10 wirkt im Umlenkabschnitt 8 die vordere Führungsfläche 17 auf das vordere innere Führungselement 19 am Antriebsorgan 16; bei einem Antrieb des Lastträgers 2 in entgegengesetzter Richtung, also entgegen der Förderrichtung 10 wirkt die Führungsfläche 18 antreibend auf das hintere innere Führungselement 20.

Dieser Winkel 26 hat auch Einfluss auf die Führung des Lastträgers 2 quer zu seiner Bewegungsbahn, da bei zueinander parallelen Führungsflächen 17 und 18 der Lastträger 2 von diesem zwar in Umfangsrichtung, also in Bewegungsrichtung geführt ist, jedoch der Lastträger 2 in radialer Richtung entlang der Führungsflächen 17 und 18 verschieblich wäre. Da dies eine ungewollte Abweichung von der vorgesehenen, kreisförmigen Bewegungsbahn darstellen würde, ist im Ausführungsbeispiel gemäß Fig. 1 zusätzlich zu der äußeren Führungsfläche 12, die ein Abweichen des Lastträgers 2 von der kreisbogenförmigen Bewegungsbahn nach außen, also von der Drehachse 9 weg verhindert, an der Führungsbahn 3 eine zusätzliche, feststehende Führungsfläche 27 ausgebildet, die eine Parallelkurve zur äußeren Führungsfläche 12 darstellt und von dieser einen Abstand 28 aufweist, der bis auf ein erforderliches Bewegungsspiel der Abmessung der äußeren Führungselemente 13 und 14 entspricht, wodurch ein Abweichen des Lastträgers 2 von der kreisbogenförmigen Bewegungsbahn in Richtung zur Drehachse 9 unterbunden ist. Für eine reine Bewegung eines Lastenträgers 2 durch den Umlenkabschnitt mit ausreichender Geschwindigkeit würde dieser alleine aufgrund seiner Fliegkraft an der äußeren Führungsfläche 12 geführt werden, da jedoch auch Arbeitsstationen im Umlenkabschnitt 8 vorgesehen sein können, bei der ein Stillstand des Lastträgers 2 erforderlich ist, ist für eine zuverlässige Positionierung erforderlich, dass der Lastträger 2 auch im Stillstand nicht von der vorgesehenen Bewegungsbahnkurve abweichen kann, wozu im Ausführungsbeispiel gemäß Fig. 1 die zusätzliche Führungsfläche 27 vorgesehen ist. Diese erstreckt sich über den Umlenkabschnitt 8 hinaus in den vorgeordneten, geraden Führungsbahnabschnitt 6 sowie in den nachgeordneten geraden Führungsbahnabschnitt 7, wodurch der Lastträger 2 auch im Einlaufbereich zwischen Führungsbahnabschnitt 6 und Umlenkabschnitt 8 bzw. im Auslaufbereich zwischen Umlenkabschnitt 8 und Führungsbahnabschnitt 7 zuverlässig geführt ist, obwohl die inneren Führungselemente 19 und 20 noch nicht beide vollständig in spielfreiem Eingriff mit dem Antriebsorgan 16 sind.

Der Winkel 26 zwischen der Führungsfläche 17 und der Bewegungsbahn des zugeordneten, vorderen Führungselements 19 kann natürlich auch kleiner sein, zum Beispiel etwa 45°, wodurch die Führungsflächen 17 und 18 nicht mehr parallel zueinander sind und nicht nur zum formschlüssigen Antreiben des Lastträgers 2 dienen, sondern auch gleichzeitig eine Bewegungsabweichung von der kreisbogenförmigen Bewegungsbahn in Richtung zur Drehachse 9 unterbunden werden kann und dadurch die zweite, feststehende Führungsfläche 27 im Umlenkabschnitt 8 entfallen kann. Je näher der Winkel 26 an einem rechten Winkel ist, umso besser ist die Führungsfläche 17 für den genauen Antrieb des Lastträgers 2 geeignet, jedoch schlechter für die radiale Führung des vorderen inneren Führungselements 19. Je kleiner der Winkel 26 gewählt ist, umso besser ist die Kontaktfläche 17 für die radiale Führung des Lastträgers 2 geeignet, jedoch umso schlechter für den formschlüssigen Antrieb des Lastträgers 2.

Eine Untergrenze für den Winkel 26 kann auch darin bestehen, dass dieser in die Nähe des Haftreibungswinkels der zwischen Führungsfläche 17 und vorderem Führungselement 19 wirksamen Materialpaarung absinkt, da in diesem Fall die dazwischen wirksame Kontaktkraft ungefähr in radialer Richtung bezogen auf die Drehachse 9 verläuft und nur mehr eine sehr geringe antreibende Komponente aufweisen kann, sowie ein Einklemmen des Lastträgers zwischen der Führungsfläche 17 und der feststehenden Führungsfläche 12 eintreten könne. Der Winkel 26 wird daher vorzugsweise zumindest größer der eineinhalb-fache Haftreibungswinkel der Materialpaarung gewählt.

Die hintere Führungsfläche 18 ist, wie in Fig. 1 dargestellt, vorzugsweise symmetrisch zur vorderen Führungsfläche 17 im Bezug auf eine durch die Drehachse 9 verlaufende Bezugsebene 29 angeordnet. Dadurch sind die Eingriffsverhältnisse zwischen Lastträger 2, der zur Bezugsebene 29 symmetrische Führungselemente 19 und 20 aufweist, sowohl in Förderrichtung 10 als auch in entgegengesetzter Richtung identisch, weshalb die Förderrichtung in einem derartigen Fördersystem 1 ohne Einbußen an Funktionalität im Bereich des Umlenkabschnittes 8 umgedreht werden kann.

Der Antrieb des zumindest einen Lastenträgers 2 erfolgt im Umlenkabschnittes 8 über das Antriebsorgan 16 und im vorgeordneten Führungsbahnabschnitt 6 mit einem ersten Antrieb 30 und im nachgeordnetem, zweiten Führungsbahnabschnitt 7 mit einem Antrieb 31. Diese Antriebe 30, 31 umfassen vorzugsweise formschlüssig am Lastträger 2 angreifende Antriebselemente, beispielsweise Zahnriemen 32, mit denen die Lastträger 2 auch außerhalb der Umlenkstation mit hoher Genauigkeit und hoher Dynamik an bestimmte Positionen bewegt werden können. Auf die Antriebe 30 und 31 wird in dieser Anmeldung nicht näher eingegangen, da sie aus dem Stand der Technik bekannt sind und beispielsweise in der Anmeldung WO 2008/019410 A1 unter anderem anhand der darin enthaltenen Figuren 9a und 9b ausführlich beschrieben sind.

Die Antriebe 30 und 31 sind ebenso, wie der Antriebsmotor 21 der Umlenkstation mit einer Steuerungsvorrichtung 22 verbunden und mit dem Antriebsmotor 21 derart synchronisiert, dass die Lastträger 2 zwischen den geradlinigen Führungsbahnabschnitten 6 und 7 und dem Umlenkabschnitt 8 nahtlos übernommen werden können. Dazu muss von der Steuervorrichtung 22 die exakte Position des Lastträgers 2 am ersten, geraden Führungsbahnabschnitt 6 erfasst sein und ebenso die exakte Drehposition des Antriebsorgans 16 erfasst sein und dieses so bewegt werden, dass die Führungsfläche 17 am Ende des ersten Führungsbahnabschnittes 6 das vordere, innere Führungselement 19 ergreift und dadurch der Antrieb 30 nahtlos vom Antriebsorgan 16 abgelöst wird.

Vorzugsweise wird ein Lastträger 2 im Übergangsbereich zwischen dem geradlinigen Führungsbahnabschnitt 6 und dem Umlenkabschnitt 8 zumindest teilweise gleichzeitig vom ersten Antrieb 30 und vom Antriebsorgan 16 angetrieben indem sich diese quasi überschneiden, wodurch zu keinem Zeitpunkt ein Lastträger 2 eine unkontrollierte Bewegung ohne formschlüssigen Eingriff mit einem Antriebselement oder einem Antriebsorgan ausführt. So wird beispielsweise der Zahnriemen 32 möglichst nahe bis an das Antriebsorgan 16 herangeführt, wodurch der Zahnriemen 32 möglichst lange in Eingriff mit einem Kupplungselement 33, beispielsweise an der Unterseite des Lastträgers in Eingriff steht. Dieses Kupplungselement 33 weist beispielsweise ein Gegenprofil der Verzahnung des Zahnriemens 32 auf.

Das Antriebsorgan 16 besitzt bei scheibenförmiger Ausbildung einen Außenumfang 34 in einem Radius 35 von der Drehachse 9 der zwischen die beiden Bahnkurven 24 und 25 der Führungselemente 13, 14, 19, 20 ragt und insbesondere etwa bis zur Mitte zwischen den beiden Bewegungsbahnen reicht, wodurch die inneren Führungselemente 19 und 20 ausreichend weit in das Antriebsorgan 16 eingreifen und ein derartiger Eingriff bereits vor dem Umlenkabschnitt durch das vordere, innere Führungselement 19 bzw. nach dem Umlenkabschnitt 8 durch das hintere, innere Führungselement 20 stattfindet. Für den Fall, dass das Antriebsorgan 16 nicht scheibenförmig ausgebildet ist, sondern beispielsweise lediglich Antriebsarme aufweist, an denen die Führungsflächen 17, 18 ausgebildet sind, gilt die erwähnte Auswahl der Größe auch für die Enden dieser Antriebsarme bzw. die von diesen überstrichenen Kreisbahnen.

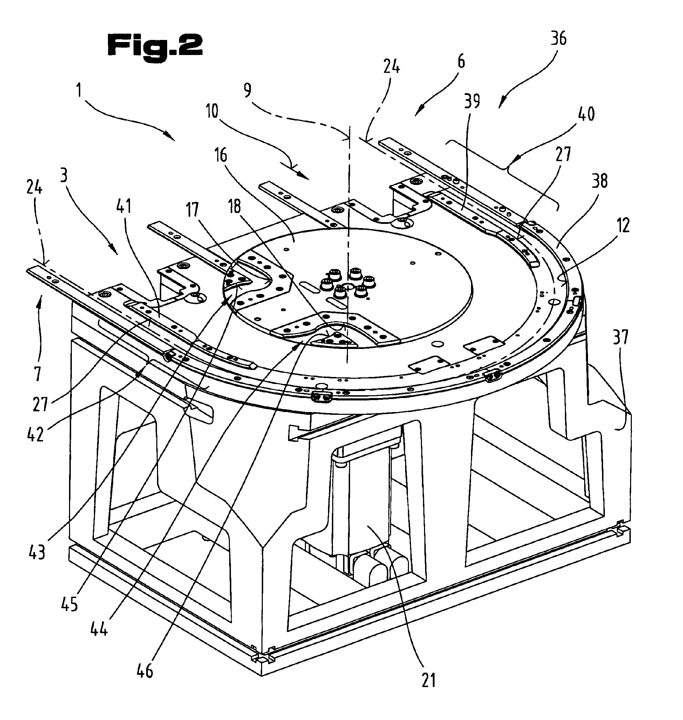

Fig. 2 zeigt eine ausschnittsweise Ansicht eines Fördersystems 1 mit dem, in dieser Figur nicht dargestellte, Teileträger 2 von einem vorgeordneten, strichliert dargestellten, ersten Führungsbahnabschnitt 6 zu einem nachgeordnetem ebenfalls strichliert angedeuteten, zweiten Führungsbahnabschnitt 7 gefördert werden können. In diesem Ausführungsbeispiel ist der Umlenkabschnitt 8 Teil einer Umlenkstation 36, die beispielsweise in einem modulartig aufgebauten Fördersystem 1 die Enden von zwei geradlinigen Führungsbahnabschnitten 6 und 7 verbindet.

Der Umlenkwinkel beträgt in diesem Ausführungsbeispiel 180°, kann selbstverständlich jedoch auch davon abweichen, wie es etwa in Fig. 1 der Fall ist. Diese Umlenkstation 36 umfasst dabei neben dem kreisbogenförmigen Umlenkabschnitt 8 auch kurze Stücke von tangential daran anschließenden, geradlinigen Führungsbahnabschnitten. Die Führung der äußeren Führungselemente 13 und 14 erfolgt wieder mit einer feststehenden, kreisbogenförmigen Führungsfläche 12, wodurch ein sanftes Umlenken der Lastträger 2 erfolgt.

Die Umlenkstation 36 umfasst in diesem Ausführungsbeispiel ein Grundgestell 37, auf dem das etwa horizontal gelagerte Antriebsorgan 16 in scheibenförmiger Ausführung zusammen mit seinem Antriebsmotor 21 gelagert ist, sowie die Führungsbahn 3 für die Lastträger 2. Die Führungsbahn 3 umfasst eine äußere, halbkreisförmige Führungsschiene 38, die einteilig ausgeführt sein kann, vorzugsweise jedoch aus mehreren Schienensegmenten zusammengesetzt ist, weiters eine Zusatzschiene 39, die ebenfalls feststehend ausgeführt ist und im Einlaufbereich 40 zwischen dem geradlinigen Teil der Bewegungsbahn 24 der äußeren Führungselemente 13, 14 und dem kreisbogenförmigen Teil der Bewegungsbahn 24 eine zusätzliche Führung der Führungselemente 13, 14 bildet und die Führungsfläche 27 aufweist. Eine weitere Zusatzschiene 41 ist im Auslaufbereich 42 beim Übergang von dem kreisbogenförmigen Teilabschnitt der Bewegungsbahn 24 zum geradlinigen Abschnitt angeordnet.

Zum Antrieb und zur Positionierung von Lastträgern 2 im Umlenkabschnitt 8 weist das Antriebsorgan 16 wieder Führungsflächen 17 und 18 auf, die im Umlenkabschnitt 8 mit den inneren Führungselementen 19 und 20 des Lastträgers formschlüssig und antreibend in Eingriff stehen.

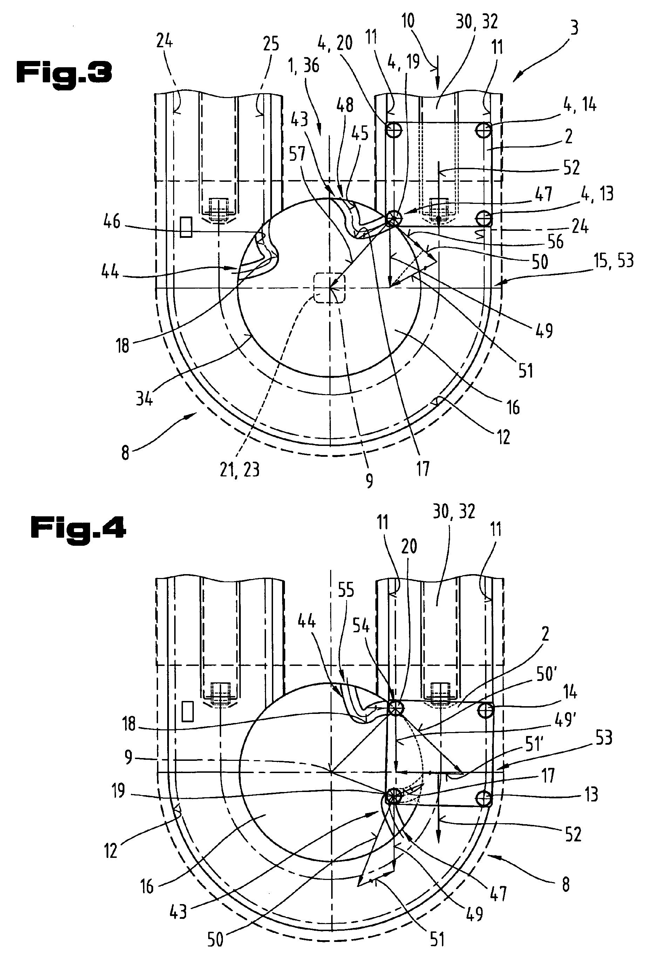

Abweichend von dem Ausführungsbeispiel in Fig. 1, wo die Führungsflächen 17 und 18 als geradlinige, ebene Flächen dargestellt sind, sind die Führungsflächen 17 und 18 beim Ausführungsbeispiel gemäß Fig. 2 gekrümmte Flächen von Führungsnuten 43 bzw. 44 am Antriebsorgan 16 ausgebildet. Die Führungsnuten 43 und 44 besitzen eine lichte Weite, die geeignet ist, die inneren Führungselemente 19 und 20 mit geringem Spiel aufzunehmen und zu führen und besitzen dazu den Führungsflächen 17 und 18 gegenüberliegende und dazu parallele Führungsflächen 45 und 46, wobei sich die erste Führungsnut 43 zwischen der Führungsfläche 17 und der Führungsfläche 45 erstreckt und die zweite Führungsnut 44 zwischen der Führungsfläche 18 und der Führungsfläche 46 erstreckt. Die Ausformung dieser Führungsnuten 43 und 44 kann auf verschiedene Weise erfolgen, wobei vorteilhafte Ausführungsbeispiele anhand von weiteren Figuren beschrieben werden. In den Fig. 3 bis 6 ist der formschlüssige und antreibende Eingriff der inneren Führungselemente 19 und 20 eines Teileträgers 2 in das Antriebsorgan 16 zu vier markanten Zeitpunkten dargestellt.

Fig. 3 zeigt in Draufsicht eine Umlenkstation wie anhand von Fig. 2 beschrieben, zu einem Zeitpunkt, an dem das vordere, innere Führungselement 19 eines Lastträgers 2 unmittelbar vor dem Eingriff in das Antriebsorgan 16 steht. Das Antriebsorgan 16 ist hier als Scheibe dargestellt, an der zwei Führungsnuten 43 und 44 ausgebildet sind, die die Führungsflächen 17 und 18 zum Führen und Antreiben der inneren Führungselemente 19 und 20 umfassen. Der Lastträger 2 wird mittels eines Antriebes 30 im vorgeordneten Förderbahnabschnitt 6 an das Antriebsorgan 16 herangeführt, wobei die Geschwindigkeit des Lastträgers 2 vorzugsweise konstant gehalten ist, jedoch auch zunehmend oder abnehmend sein kann.

Im geradlinigen, vorgeordneten Führungsbahnabschnitt 6 ist der Lastträger 2 an den geradlinigen, feststehenden Führungsflächen 11 geführt, und führt dadurch eine reine Translationsbewegung aus. In der dargestellten Position des Lastträgers 2 befindet sich das innere, vordere Führungselement 19 unmittelbar vor dem Eintritt in die Führungsnut 43, wobei der Punkt am Außenumfang 34 des scheibenförmigen Antriebsorgans 16, an dem das Führungselement 19 in die Führungsnut 43 eintritt, als Einkoppelungspunkt 47 bezeichnet werden kann, da an diesem Punkt der Koppelungsvorgang zwischen Lastträger 2 und Antriebsorgan 16 beginnt. Der Punkt, an dem das Führungselement 19 aus der Führungsnut 30 am anderen Endes ihres Verlaufes wieder aus dem Antriebsorgan 16 austritt, wird als Auskoppelungspunkt 48 bezeichnet.

In Fig. 3 sind weiters die Geschwindigkeitsverhältnisse beim Eintritt des vorderen, inneren Führungselements 19 in die Führungsnut 43 dargestellt. Dabei bewegt sich das vordere, innere Führungselement 19, beispielsweise mit einer Absolutgeschwindigkeit 49, die zu diesem Zeitpunkt noch parallel zu den geradlinigen Führungsflächen 11 gerichtet ist. Durch die Rotationsgeschwindigkeit des Antriebsorgans 16 bewegt sich der Einkoppelungspunkt 47 mit einer Führungsgeschwindigkeit 45 in tangentialer Richtung, also rechtwinkelig zur Radialrichtung zur Drehachse 9. Aus diesen beiden Geschwindigkeiten ergibt sich eine Relativgeschwindigkeit 51, mit der sich das Führungselement 19 relativ zum Antriebsorgan 16 bewegt.

Damit das Führungselement 19 in die Führungsnut 43 eintreten kann, wird die Führungsgeschwindigkeit 50 des Antriebsorgans 16 so gewählt, dass die Relativgeschwindigkeit 51 parallel zur Richtung der Führungsnut 43 im betrachteten Punkt, also hier dem Einkoppelungspunkt 47 verläuft. Zwischen der Führungsgeschwindigkeit 50 und der Form der Führungsnut 43 besteht somit ein direkter Zusammenhang, wobei es im Allgemeinen von Vorteil ist, wenn zuerst ein günstiger Verlauf der Führungsnut 43 festgelegt wird und darauf basierend sowie im Zusammenhang mit einer Vorgabegeschwindigkeit 52 des Lastträgers 2 die entsprechende Führungsgeschwindigkeit 50 durch einen passenden Geschwindigkeitsverlauf des Antriebsorgans 16 erzielt wird.

Dieses Verknüpfung der erforderlichen Geschwindigkeiten erfolgt mit Hilfe der Steuervorrichtung 22, da in diese über den ersten Antrieb 30 die Vorgabegeschwindigkeit 52 als Berechnungsbasis eingeht und unter Berücksichtigung der kinematischen Zusammenhänge dem Antriebsorgan 16 unter Verwendung eines geschwindigkeitsregelbaren Antriebsmotors 21, die dazu passende Führungsgeschwindigkeit 50 vorgegeben wird.

In dem in Fig. 3 dargestellten Zeitpunkt stimmt die Absolutgeschwindigkeit 49 des vorderen inneren Führungselements 19 aufgrund der reinen Translation des Lastträgers 2 mit dessen Vorgabegeschwindigkeit 52 überein. Dies ist der Fall bis der Lastträger 2 bei seiner Bewegung in Förderrichtung 10 mit dem vorderen äußeren Führungselement 13 den Übergangspunkt 53 erreicht, in dem die geradlinige Führungsfläche 11 tangential in die kreisbogenförmig gekrümmte Führungsfläche 12 übergeht.

Fig. 4 zeigt die Bewegung des Lastträgers 2 zu einem Zeitpunkt, an dem das vordere, äußere Führungselement 13 den Übergangspunkt 53 bereits erreicht, das hintere äußere Führungselement 14 diesen jedoch noch nicht erreicht hat. In dieser Phase bewegt sich das vordere, äußere Führungselement 13 bereits auf einer Kreisbahn um die Drehachse 9, während das hintere, äußere Führungselement 14 noch eine geradlinige Bewegung parallel zur Führungsfläche 11 ausführt.

In Fig. 4 ist genau der Zeitpunkt dargestellt, in dem das hintere, innere Führungselement 20 am Einkoppelungspunkt 54 in die hintere Führungsnut 44 eintritt, aus der er nach dem Durchlaufen des Umlenkabschnitts 8 an einem Auskoppelungspunkt 55 wieder austritt. Der an den Einkoppelungspunkt 54 anschließende Verlauf der zweiten, hinteren Führungsnut 44 unterscheidet sich von dem an den vorderen Einkoppelungspunkt 47 anschließenden Verlauf der ersten, vorderen Führungsnut 43, da das hintere, innere Führungselement 20 beim Eintreten in die Führungsnut 44 und daran anschließend eine geringfügig andere Bahnkurve als das vordere, innere Führungselement 19 beim Eintreten in die vordere Führungsnut 43 durchläuft, da sich der Lastträger 2 nun nicht mehr rein translatorisch bewegt, da das vordere, äußere Führungselement 13 bereits von der Führungsfläche 12 auf einer Kreisbahn um die Drehachse 9 geführt ist.

Der Verlauf der zweiten Führungsnut 44 nach dem Einkoppelungspunkt 54 ergibt sich zwangsläufig, da entweder die Vorgabegeschwindigkeit 52 des Lastträgers 2 und der Verlauf der ersten Führungsnut 43 nach deren Einkoppelungspunkt 47 festgelegt sind und sich dadurch auch die Führungsgeschwindigkeit 50 am Antriebsorgan 16 ergibt, die auch die Führungsgeschwindigkeit 50' beim zweiten Einkoppelungspunkt 54 festlegt oder die Vorgabegeschwindigkeit 52 und die Führungsgeschwindigkeit 50 vorgewählt werden, woraus sich der Verlauf der ersten Führungsnut 43 nach deren Einkoppelungspunkt 47 ergibt und auch zwangsläufig die Führungsgeschwindigkeit 50' am Einkoppelungspunkt 54 der zweiten Führungsnut 44.

Da im Einlaufbereich 40 die Form der zweiten Führungsnut 44 von der Form der ersten Führungsnut 43 abhängig ist, ist der Verlauf der ersten Führungsnut 43 sorgfältig zu wählen, wobei sich eine in den Fig. 3 bis 6 dargestellte Form der Führungsnuten 43 und 44 als vorteilhaft erwiesen hat. Der hier dargestellte Verlauf der Führungsnut 43 ergibt sich dadurch, dass im Einkoppelpunkt 47 (siehe Fig. 3) die Führungsgeschwindigkeit 50 des Antriebsorgans 16 größer ist als die auf die Drehachse 9 bezogene Tangentialkomponente 56 der Absolutgeschwindigkeit 49 des vorderen Führungselements 19. Dadurch besitzt die Relativgeschwindigkeit 51 und dadurch auch die Führungsfläche 17, ausgehend vom Einkoppelungspunkt 47 eine Richtung, die bezogen auf eine zur Drehachse 9 weisende Radialrichtung 57 entgegen der Förderrichtung 10 nach hinten geneigt ist. Dies kann auch so verdeutlicht werden, dass ausgehend vom Einkoppelungspunkt 47 das Antriebsorgan 16 gegenüber der Absolutbewegung des vorderen, inneren Führungselements 19 voreilt, wodurch der Verlauf der Führungsnut 43 gegenüber der Radialrichtung 57 nach hinten geneigt ist.

Man erkennt in Fig. 4 auch, dass das vordere, innere Führungselement 19 bereits von der Führungsfläche 17 erfasst ist und von dieser auch ein formschlüssiger Antrieb des Lastträgers 2 bewirkt wird. Da auch das zweite innere Führungselement 20 bereits in Eingriff mit der zweiten Führungsfläche 18 steht, ist auch die Position des Lastträgers 2 exakt definiert, auch wenn dieser nicht mehr mit dem ersten Antrieb, hier in Form eines Zahnriemens 32 in Eingriff steht. Man kann erkennen, dass der Abstand zwischen der ersten Führungsfläche 17 und der zweiten Führungsfläche 18 zumindest annähernd der lichten Weite zwischen den Führungselementen 19 und 20 entspricht, wodurch der Lastträger 2 zusätzlich zu den auf die äußeren Führungselemente 13 und 14 wirkenden äußeren Führungsflächen 11 und 12 in exakter Position geführt ist und dadurch über die Steuervorrichtung 22 zusammen mit dem Antriebsmotor 21 volle Kontrolle über die Position und die Bewegung des Lastträgers 2 gegeben ist.

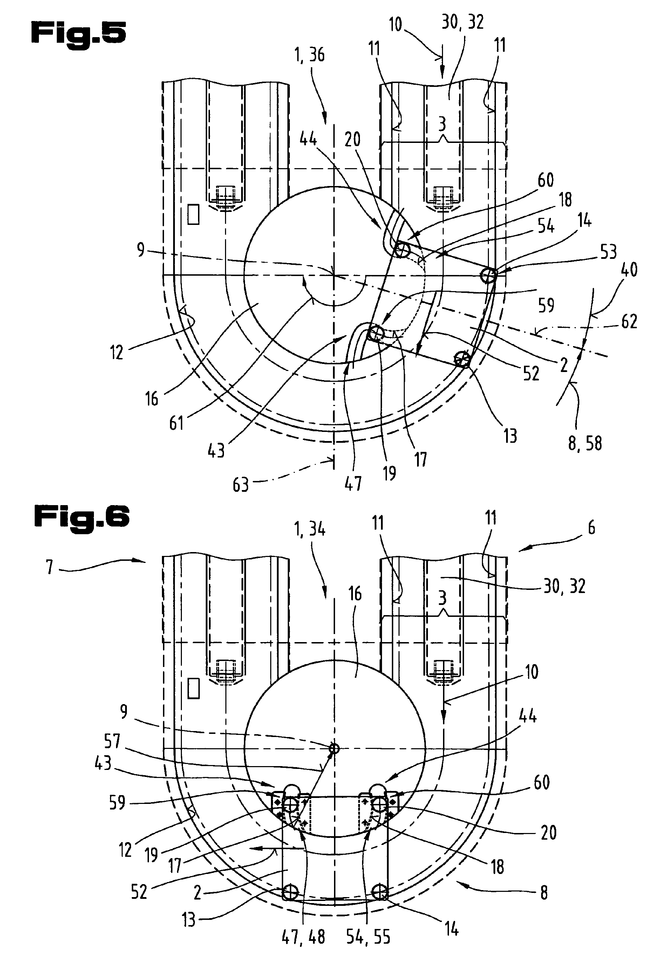

In Fig. 5 ist der Zeitpunkt dargestellt, zudem das äußere, hintere Führungselement 14 den Übergangspunkt 53 passiert und dadurch von einer durch die Führungsfläche 11 geführten, geradlinigen Bewegung in eine von der gekrümmten Führungsfläche 12 geführte, kreisbogenförmige Bewegung wechselt. Ab diesem Zeitpunkt bewegen sich sowohl das vordere, äußere Führungselement 13 und das hintere, äußere Führungselement 14 auf einer Kreisbahn um die Drehachse 9, das heißt der Lastträger 2 führt eine reine Rotationsbewegung bezüglich der Drehachse 9 aus.

Da das Antriebsorgan 16 über die Führungsflächen 17 und 18 formschlüssig mit den inneren Führungselementen 19 und 20 in Eingriff steht und ebenfalls eine Drehbewegung um die Drehachse 9 ausführt, findet in dieser Phase der Umlenkbewegung keine Relativbewegung zwischen Lastträger 2 und Antriebsorgan 16 statt. Der Lastträger 2 wird somit über die äußeren Führungselemente 13 und 14 entlang der Führungsfläche 12 auf einer Kreisbahn geführt und von der ersten Führungsfläche 17 entlang der Führungsbahn 3, die in dieser Phase kreisbogenförmig ist, angetrieben. Da zu diesem Zeitpunkt die Relativbewegung zwischen dem Lastträger 2 und dem Antriebsorgan 16 zum Stillstand kommt, kann diese Stellung des Lastträgers 2 auch als Ende des Übergangsbereiches 40 angesehen werden, in dem der Einkoppelungsvorgang zwischen Lastträger 2 und Antriebsorgan 16 stattfindet. Der daran anschließende Umlenkabschnitt 8 kann aufgrund der fehlenden Relativbewegung auch als Synchronabschnitt 58 bezeichnet werden, in dem der Lastträger 2 zusammen mit dem Antriebsorgan 16 sich wie ein starrer Körper um die Drehachse 9 bewegt.

Wie aus der Zusammenschau der Fig. 3 bis 5 erkennbar ist, bewegt sich das vordere, innere Führungselement 19 ausgehend vom Einkoppelungspunkt 47 bis zu einem Rastpunkt 59 durch die erste Führungsnut 43, wobei die Relativbewegung zwischen Führungselement 19 und Antriebsorgan 16 im Rastpunkt 59 zum Stillstand kommt. Ebenso findet im Einlaufbereich 40 die Bewegung des hinteren, inneren Führungselements 20 ausgehend vom Einkoppelungspunkt 54 durch die zweite Führungsnut 44 bis zu einem Rastpunkt 60 statt, indem auch diese Relativbewegung zwischen Lastträger 2 und Antriebsorgan 16 zum Stillstand kommt. Wie in Fig. 5 weiters erkennbar ist, greift der zwischen den Führungsflächen 17 und 18 befindliche Teil des Antriebsorgans 16 zwischen die inneren Führungselemente 19 und 20 ein, wobei dieser Eingriff dem Eingriff eines Zahnprofils zwischen einander zugewandten Zahnflanken eines Gegenprofiles ähnelt, es sich dabei jedoch um eine völlig andere, kinematische Situation handelt, da ein Gegenprofil bei einer Verzahnung nicht synchron mit dem antreibenden Zahnprofil mitbewegt wird, sondern zu diesem eine Relativbewegung ausführt.

Je nachdem, an welcher Stelle die kreisbogenförmige Führungsfläche 12 an einem weiteren Übergangspunkt wieder in eine nachfolgende Führungsfläche 11 übergeht und dadurch der Umlenkabschnitt 8 bzw. der Synchronabschnitt 58 endet, ergibt sich ein Umlenkwinkel 61, der im Ausführungsbeispiel gemäß den Fig. 2 bis 5 etwa 180° beträgt. Der Umlenkabschnitt 8 bzw. Synchronabschnitt 58 endet an der Stelle, an der das äußere, vordere Führungselement 13 an das Ende der kreisbogenförmigen Führungsfläche 12 gelangt und in eine nachfolgende von der Kreisbahn abweichende Führungsfläche 11 übergeht, wodurch die reine Rotationsbewegung des Lastträgers 2 endet und der Auskoppelungsvorgang beginnt, der im Auslaufbereich 42 (siehe Fig. 2) stattfindet.

Die Bewegungsvorgänge beim Auskoppeln des Lastträgers aus dem Antriebsorgan 16 nach dem Umlenkabschnitt 8 entsprechen im Wesentlichen jenen Bewegungen und Relativbewegungen, die beim Einkoppelungsvorgang stattfinden und können sogar bis auf entgegengesetzte Bewegungsrichtungen und Geschwindigkeiten spiegelbildlich ablaufen. Dies ist beim dargestellten Ausführungsbeispiel der Fall bzw. kann der Fall sein, da sowohl Lastträger 2 mit seinen Führungselementen 13, 14, 19 und 20 als auch die damit zusammenwirkenden Führungsflächen 17 und 18 am Antriebsorgan 16 spiegelsymmetrisch zu einer durch die Drehachse 9 verlaufende Bezugsebene 62 ausgebildet sind.

Die in Fig. 5 ist eine Symmetrieebene 63 des Umlenkabschnittes 8 bzw. der gesamten Umlenkstation 36 dargestellt, anhand der leicht erkennbar ist, dass beispielsweise bei konstanter Vorgabegeschwindigkeit 52 des Lastträgers 2 die Bewegungsverhältnisse beim Durchlaufen der Umlenkstation 36 zeitlich und auch räumlich spiegelbildlich bezüglich der Symmetrieebene 63 sind und daher auch der Auskoppelungsvorgang quasi spiegelbildlich zum Einkoppelungsvorgang abläuft.

Selbstverständlich kann bei einer derartigen Umlenkstation 36 der Umlenkwinkel 61 auch kleiner oder sogar auch größer als 180° gewählt werden, wodurch sich der Winkel zwischen der Bezugsebene 62, die den Übergang in den Synchronabschnitt kennzeichnet und der Symmetrieebene 63 verändert.

Fig. 6 zeigt ein weiteres Ausführungsbeispiel eines Fördersystems bzw. einer darin eingebundenen Umlenkstation 34, die einen ersten, vorgeordneten Führungsbahnabschnitt 6 mit einem zweiten, nachgeordneten Führungsbahnabschnitt 7 verbindet. Dabei sind für gleiche Teile gleiche Bezugszeichen bzw. Bauteilbezeichnungen wie in den vorangegangenen Fig. 1 bis 5 verwendet worden. Um unnötige Wiederholungen zu vermeiden, wird auf die detaillierte Beschreibung in den vorangegangenen Fig. hingewiesen bzw. Bezug genommen.

Der Unterschied zum vorherigen Ausführungsbeispiel besteht in Fig. 6 darin, dass die Führungsnuten 43 und 44 einen anderen Verlauf besitzen, der jedoch ebenfalls auch zum formschlüssigen Antreiben des Lastträgers 2 im Umlenkabschnitt 8 geeignet ist. Zum Unterschied zur Ausführung gemäß den Fig. 2 bis 5 sind in Fig. 6 der Einkoppelungspunkt 47 und der Auskoppelungspunkt 48, an denen das vordere, innere Führungselement 20 in die Führungsnut 43 eintritt bzw. austritt, nicht voneinander distanziert, sondern fallen zusammen, das heißt, das vordere, innere Führungselement 19 tritt in einem Einkoppelungspunkt 47 in die Führungsnut 43 am Antriebsorgan 16 ein, kehrt in dem Punkt, an dem die Bewegungsbahn im Einlaufbereich ihren geringsten Abstand zur Drehachse 9 besitzt, ihre Bewegungsrichtung um und beendet die Relativbewegung in der Führungsnut 43 nach dem Ende des Einlaufbereiches in einem Rastpunkt 59. Beim Erreichen dieses Rastpunktes 59 durch das vordere, innere Führungselement 19 hat auch das hintere Führungselement 20 nach Eintritt am Einkoppelungspunkt 54 seinen Rastpunkt 60 erreicht, wodurch der Teileträger 2 wieder eine synchrone Rotationsbewegung zusammen mit dem Antriebsorgan 16 ausführt. Da der Verlauf der Führungsnuten 43 und 44 jeweils die Relativbewegung zwischen den Führungselementen 19 und 20 gegenüber dem Antriebsorgan 16 widerspiegelt, ist ersichtlich, dass unterschiedliche Verläufe der Führungsnuten 43 und 44 auch unterschiedliche Antriebsgeschwindigkeiten für das Antriebsorgan 16 bedeuten, wenn identische Vorgabegeschwindigkeiten 52 für den Lastträger vorgegeben sind.

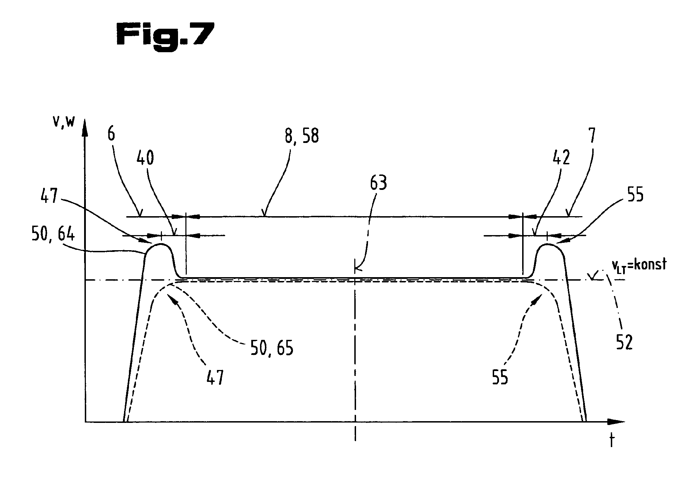

In Fig. 7 sind in einem Diagramm noch einmal die Geschwindigkeitsverhältnisse für die Bewegung eines Teileträgers 2 durch den Umlenkabschnitt 8 eines erfindungsgemäßen Fördersystems 1 dargestellt. Dabei ist der Einfachheit halber in einer strichpunktierten Linie eine zeitlich konstante Vorgabegeschwindigkeit 52 angenommen, wobei auf der Abszisse der Zeitablauf und auf der Ordinate die Geschwindigkeit aufgetragen ist. Weiters ist in Volllinie die Geschwindigkeit der Führungsgeschwindigkeit 50 des Antriebsorgans bzw. dessen damit korrespondierende Winkelgeschwindigkeit eingetragen. Wie leicht zu erkennen ist, stimmen beim Durchlaufen des Umlenkabschnittes 8 bzw. des Synchronabschnittes 58 diese Geschwindigkeiten überein, das heißt es findet keine Relativbewegung zwischen Lastträger 2 und Antriebsorgan 16 statt. Davor und danach durchläuft der Teileträger 2 den Einlaufbereich 40 bzw. den Auslaufbereich 42, in dem der Einkoppelungsvorgang bzw. der Auskoppelungsvorgang stattfindet.

Der in Volllinie dargestellte Geschwindigkeitsverlauf 64 gehört dabei zu der Ausführungsform gemäß den Fig. 2 bis 5, bei der im Einlaufbereich 40 das Antriebsorgan 16 dem inneren, vorderen Führungselement 19 voreilt, was an der Überschreitung der konstanten Vorgabegeschwindigkeit 52 erkennbar ist. Bis zum Beginn des Synchronabschnittes gleicht sich diese Führungsgeschwindigkeit 50 an die Vorgabegeschwindigkeit 52 an, wodurch die Synchronität hergestellt ist. Durch dieses Voreilen ist, wie bereits erwähnt, der Verlauf der Führungsnut 43 nach dem Einkoppelungspunkt 47 gegenüber der Radialrichtung 57 nach hinten geneigt. Im Auslaufbereich 42 ist die Führungsgeschwindigkeit 50 aufgrund der symmetrischen Ausführung von Lastträger 2 und Führungsflächen 17 und 18 ebenfalls höher als die Vorgabegeschwindigkeit 52 bis das hintere, innere Führungselement 20 im Auskoppelungspunkt 55 aus der Führungsnut 44 austritt.

Der in strichlierten Linien dargestellte Geschwindigkeitsverlauf 65 gehört zu der Ausführungsform gemäß Fig. 6, wobei erkennbar ist, dass beim Durchlaufen des Einlaufbereiches 40 das Antriebsorgan 16 dem vorderen, inneren Führungselement 19 nacheilt, wodurch der Verlauf der Führungsnut 43 im Anschluss an den Einkoppelungspunkt 47 gegenüber einer Radialrichtung 57 nach vorne geneigt ist.

Auch hier ist die räumliche und zeitliche Symmetrie der Einkoppelungsbewegung und der Auskoppelungsbewegung bezüglich der Symmetrieebene 63wieder erkennbar.

Die beschriebene Überschneidung eines formschlüssigen vorgeordneten Antriebs 30 und eines formschlüssigen nachgeordneten Antriebs 31 mit dem formschlüssigen Antrieb durch das Antriebsorgan 16, das im Umlenkabschnitt 8 mit zwei Führungselementen 19, 20 des Lastträgers 2 im Eingriff steht, stellt eine alternative Lösung der Aufgabe der Erfindung dar und ist diese Lösung nicht auf kreisbogenförmig gekrümmte Umlenkabschnitte 8 beschränkt, sondern kann ein derartiges Fördersystem 1 auch beliebig gekrümmte Umlenkabschnitte 8 aufweisen, wobei die Festlegung des Verlaufs der Führungsflächen 17 und 18 bzw. von Führungsnuten 43 und 44 analog zu den vorigen Erläuterungen in Abhängigkeit von vorgegebenen Geschwindigkeitsverläufen von Lastträger 2 und Antriebsorgan 16 erfolgt.

In den Fig. 1, 3, 4, 5, 6 sind die an der Unterseite des Lastträgers 2 angeordneten Führungselemente 4 zur besseren Sichtbarkeit in Volllinien dargestellt, obwohl sie eigentlich verdeckt sind.

### Bezugszeichenaufstellung

- 1: Fördersystem
- 2: Lastträger
- 3: Führungsbahn
- 4: Führungselement
- 5: Führungsrolle
- 6: Führungsbahnabschnitt
- 7: Führungsbahnabschnitt
- 8: Umlenkabschnitt
- 9: Drehachse
- 10: Förderrichtung
- 11: Führungsfläche
- 12: Führungsfläche
- 13: Führungselement
- 14: Führungselement
- 15: Anschlusspunkt
- 16: Antriebsorgan
- 17: Führungsfläche
- 18: Führungsfläche
- 19: Führungselement
- 20: Führungselement
- 21: Antriebsmotor
- 22: Steuervorrichtung
- 23: Achse
- 24: Bewegungsbahn
- 25: Bewegungsbahn
- 26: Winkel
- 27: Führungsfläche
- 28: Abstand
- 29: Bezugsebene
- 30: Antrieb
- 31: Antrieb
- 32: Zahnriemen
- 33: Kupplungselement
- 34: Außenumfang
- 35: Radius
- 36: Umlenkstation
- 37: Grundgestell
- 38: Führungsschiene
- 39: Zusatzschiene
- 40: Einlaufbereich
- 41: Zusatzschiene
- 42: Auslaufbereich
- 43: Führungsnut
- 44: Führungsnut
- 45: Führungsfläche
- 46: Führungsfläche
- 47: Einkoppelungspunkt
- 48: Auskoppelungspunkt
- 49: Absolutgeschwindigkeit
- 50: Führungsgeschwindigkeit
- 51: Relativgeschwindigkeit
- 52: Vergabegeschwindigkeit
- 53: Übergangspunkt
- 54: Einkoppelungspunkt
- 55: Auskoppelungspunkt
- 56: Tangentialkomponente
- 57: Radialrichtung
- 58: Synchronabschnitt
- 59: Rastpunkt
- 60: Rastpunkt
- 61: Umlenkwinkel
- 62: Bezugsebene
- 63: Symmetrieebene
- 64: Geschwindigkeitsverlauf

## Patentansprüche

1. Fördersystem (1) umfassend eine Führungsbahn (3) mit einem kreisbogenförmig um eine Drehachse (9) verlaufenden Umlenkabschnitt (8), zumindest einen Führungselemente (4), insbesondere vier Führungsrollen (5), aufweisenden, entlang der Führungsbahn (3) bewegbaren und quer zur Führungsbahn (3) geführten Lastträger (2), wobei im Umlenkabschnitt (8) zwei in Förderrichtung (10) voneinander beabstandete Führungselemente (13, 14) des Lastträgers (2) von einer kreisbogenförmig gekrümmten, feststehenden äußeren Führungsfläche (12) der Führungsbahn (3) geführt sind, sowie ein um die Drehachse (9) schwenk- oder drehbares, an einen mit einer Steuervorrichtung (22) verbundenen Antriebsmotor (21) gekoppeltes, insbesondere scheibenförmiges, Antriebsorgan (16) zum Antreiben des Lastträgers (2) im Umlenkabschnitt (8), **dadurch gekennzeichnet, dass** das Antriebsorgan (16) zumindest zwei voneinander beabstandete Führungsflächen (17, 18) aufweist, die im Umlenkabschnitt (8) mit zwei voneinander beabstandeten und gegenüber den äußeren Führungselementen (13, 14) näher zur Drehachse (9) angeordneten inneren Führungselementen (19, 20) des Lastträgers (2) in formschlüssigem und antreibenden Eingriff stehen.

2. Fördersystem (1) nach Anspruch 1, **dadurch gekennzeichnet, dass** der Lastträger (2) im Umlenkabschnitt (8) quer zu seiner Bewegungsbahn nur durch die auf die äußeren Führungselemente (13, 14) einwirkende, feststehende äußere Führungsfläche (12) und durch die auf die inneren Führungselemente (19, 20) einwirkenden Führungsflächen (17, 18) des Antriebsorgans (16) geführt ist.

3. Fördersystem (1) nach Anspruch 1 oder 2, **dadurch gekennzeichnet, dass** die Führungsflächen (17, 18) am Antriebsorgan (16) durch die Führungselemente (19, 20) aufnehmende, kulissenartige Führungsnuten (43, 44) gebildet sind, wobei die inneren Führungselemente (19, 20) bei Durchlaufen ihrer Bewegungsbahn (25) vor dem Umlenkabschnitt (8) in einem Einkoppelungspunkt (47, 54) in die Führungsnut (43, 44) eintreten und nach dem Umlenkabschnitt (8) in einem Auskoppelungspunkt (48, 55) aus der Führungsnut (43, 44) austreten.

4. Fördersystem (1) nach Anspruch 3, **dadurch gekennzeichnet, dass** Einkoppelungspunkt (47, 54) und Auskoppelungspunkt (48, 55) eines Führungselements (19, 20) an einer Führungsnut (43, 44) zusammenfallen, wodurch die Führungsnut (43, 44) von dem Führungselement (19, 20) in zwei Richtungen durchlaufen wird.

5. Fördersystem (1) nach Anspruch 3, **dadurch gekennzeichnet, dass** Einkoppelungspunkt (47, 54) und Auskoppelungspunkt (48, 55) eines Führungselements (19, 20) an einer Führungsnut (43, 44) voneinander distanziert sind und die Führungsnut (43, 44) dazwischen einen stetigen Verlauf aufweist, wodurch die Führungsnut (43, 44) von dem Führungselement (19, 20) im Wesentlichen in einer Richtung durchlaufen wird.

6. Fördersystem (1) nach einem der vorhergehenden Ansprüche, **dadurch gekennzeichnet, dass** ein gerade verlaufender vorgeordneter Führungsbahnabschnitt (6) tangential in den Umlenkabschnitt (8) einmündet und/oder an den Umlenkabschnitt (8) ein gerade verlaufender nachgeordneter Führungsbahnabschnitt (7) tangential anschließt.

7. Fördersystem (1) nach einem der vorhergehenden Ansprüche, **dadurch gekennzeichnet, dass** der Lastträger (2) im vorgeordneten Führungsbahnabschnitt (6) und in einem Einlaufbereich (40) des Umlenkabschnitts (8) mit einem ersten Antrieb (30) formschlüssig in Eingriff steht und/oder in einem Auslaufbereich (42) des Umlenkabschnitts (8) und einem nachgeordneten Führungsbahnabschnitt (7) mit einem zweiten Antrieb (31) formschlüssig in Eingriff steht.

8. Fördersystem (1) nach einem der vorhergehenden Ansprüche, **dadurch gekennzeichnet, dass** der Lastträger (2) zwei zueinander quer zur Förderrichtung (10) distanzierte vordere Führungselemente (13, 19) und zwei hintere zueinander quer zur Förderrichtung (10) distanzierte hintere Führungselemente (14, 20) in zueinander rechteckiger, insbesondere quadratischer, Anordnung aufweist.

9. Fördersystem (1) nach einem der vorhergehenden Ansprüche, **dadurch gekennzeichnet, dass** die Führungsbahn (3) außerhalb des Umlenkabschnitts (8) zumindest abschnittsweise zwei zueinander distanzierte Führungsschienen, insbesondere mit geradlinigen Führungsflächen (11) zur Querführung einerseits der inneren Führungselemente (19, 20) und andererseits der äußeren Führungselemente (13, 14) umfasst.

10. Fördersystem (1) nach einem der vorhergehenden Ansprüche, **dadurch gekennzeichnet, dass** das Antriebsorgan (16) etwa bis zur Mitte zwischen den Bewegungsbahnen (24) der äußeren Führungselemente (13, 14) und den Bewegungsbahnen (25) der inneren Führungselemente (19, 20) ragt.

11. Fördersystem (1) nach einem der vorhergehenden Ansprüche, **dadurch gekennzeichnet, dass** das an den mit einer Steuerungsvorrichtung (22) verbundenen Antriebsmotor (21) gekoppelte Antriebsorgan (16) eine programmierbare Achse (23) zur gesteuerten Bewegung des Lastträgers (2) bildet, und dass der Antriebsmotor (21) durch die Steuerungsvorrichtung (22) in seinem Drehzahlverlauf regelbar ist und mit dem vorgeordneten ersten Antrieb (30) und/oder dem nachgeordneten zweiten Antrieb (31) derart gekoppelt ist, dass die am Lastträger (2) vom Antriebsorgan (16) bewirkten Geschwindigkeiten im Einlaufbereich (40) und im Auslaufbereich (42) mit dem ersten Antrieb (30) und mit dem zweiten Antrieb (31) übereinstimmen.

12. Fördersystem (1) nach einem der vorhergehenden Ansprüche, **dadurch gekennzeichnet, dass** die äußeren Führungselemente (13, 14) und die inneren Führungselemente (19, 20) spiegelsyrnmetrisch bezogen auf eine rechtwinkelig zu Förderrichtung angenommene Bezugsebene (62) am Lastträger (2) angeordnet sind und die Führungsfläche (17) bzw. Führungsnut (43) für das bezogen auf die Förderrichtung vordere innere Führungselement (19) und die Führungsfläche (18) bzw. Führungsnut (44) für das hintere innere Führungselement (20) spiegelsymmetrisch bezüglich einer durch die Drehachse (9) verlaufenden Bezugsebene (29) auf dem Antriebsorgan (16) angeordnet sind.

13. Fördersystem (1) nach einem der vorhergehenden Ansprüche, **dadurch gekennzeichnet, dass** die Führungsnuten (43, 44) einen Verlauf aufweisen, der mit der jeweiligen Richtung der Relativgeschwindigkeit (51) zwischen der Absolutgeschwindigkeit (49) des Führungselements (19, 20) des mit vorgegebener, insbesondere konstanter, Geschwindigkeit bewegten Lastträgers (2) und der Führungsgeschwindigkeit (50) des bewegten Antriebsorgans (16) übereinstimmt.

14. Fördersystem (1) nach einem der vorhergehenden Ansprüche, **dadurch gekennzeichnet, dass** die Führungsflächen (17, 18) bzw. die Führungsnuten (43, 44) einen Verlauf aufweisen, sodass während des Eingriffs der Führungselemente (19, 29) mit den Führungsflächen (17, 18) oder in die Führungsnuten (43, 44) am Antriebsorgan (16) zumindest an einer der Führungsflächen (17, 18) bzw. Führungsnuten (43, 44) deren Richtung zur Bewegungsbahn (25) des damit in Eingriff befindlichen inneren Führungselements (19, 20) einen Winkel (26) einnimmt, der zumindest dem 1,5-fachen des Haftreibungswinkels der zwischen Führungsfläche (17, 18) und Führungselement (19, 20) wirksamen Materialpaarung entspricht.

15. Fördersystem (1) nach einem der vorhergehenden Ansprüche, **dadurch gekennzeichnet, dass** der beim Durchfahren des Umlenkabschnitts (8) wirksame Teilabschnitt der Führungsflächen (17, 18) bzw. der Führungsnuten (43, 44) viertelkreisförmig ist.

16. Verfahren zum Führen und Antreiben sowie wahlweisen Positionieren eines Lastträgers (2) mit Führungselementen (4), insbesondere Führungsrollen (5), in einem kreisbogenförmig um eine Drehachse (9) verlaufenden Umlenkabschnitt (8) einer Führungsbahn (3), wobei im Umlenkabschnitt (8) zwei in Förderrichtung (10) voneinander beabstandete Führungselemente (13, 14) des Lastträgers (2) von einer kreisbogenförmig gekrümmten, feststehenden äußeren Führungsfläche (12) geführt werden und ein um die Drehachse (9) schwenk- oder drehbares, an einen mit einer Steuervorrichtung (22) verbundenen Antriebsmotor (21) gekoppeltes, insbesondere scheibenförmiges, Antriebsorgan (16) zum Antreiben des Lastträgers (2) vorgesehen ist, **dadurch gekennzeichnet, dass** im Umlenkabschnitt (8) zwei voneinander beabstandete und gegenüber den äußeren Führungselementen (13, 14) näher zur Drehachse (9) angeordnete innere Führungselemente (19, 20) des Lastträgers (2) formschlüssig mit zwei voneinander beabstandeten Führungsflächen (17, 18) des Antriebsorgans (16) im Eingriff stehen und dadurch der Lastträger (2) im Umlenkabschnitt (8) angetrieben und wahlweise positioniert wird.

17. Verfahren nach Anspruch 16, **dadurch gekennzeichnet, dass** der Lastträger (2) mittels eines formschlüssigen ersten Antriebs (30) aus einem vorgeordneten, insbesondere gerade verlaufenden, Führungsbahnabschnitt (6) in den tangential anschließenden Umlenkabschnitt (8) gefördert wird und mittels eines formschlüssigen zweiten Antriebs (31) aus dem Umlenkabschnitt (8) in einen tangential nachgeordneten, insbesondere gerade verlaufenden Führungsbahnabschnitt (7) gefördert wird.

18. Verfahren nach Anspruch 17, **dadurch gekennzeichnet, dass** in einem Einlaufbereich (40) am Anfang des Umlenkabschnitts (8) der erste Antrieb (30) mit dem Lastträger (2) sowie die, in Förderrichtung gesehen, vordere Führungsfläche (17) des Antriebsorgans (16) mit dem vorderen inneren Führungselement (19) gleichzeitig in formschlüssigem Eingriff stehen und/oder in einem Auslaufbereich (42) am Ende des Umlenkabschnitts (8) die, in Förderrichtung gesehen, hintere Führungsfläche (18) des Antriebsorgans (16) mit dem hinteren inneren Führungselement (20) und der zweite Antrieb (31) mit dem Lastträger (2) gleichzeitig in formschlüssigem Eingriff stehen.

19. Verfahren nach Anspruch 17 oder 18, **dadurch gekennzeichnet, dass** die Antriebsgeschwindigkeit des Antriebsorgans (16) während des Förderns eines Lastträgers (2) durch den Umlenkabschnitt (8) mittels der Steuervorrichtung (22) so gesteuert wird, dass die Fördergeschwindigkeit des Lastträgers (2) zwischen dem vorgeordneten Führungsbahnabschnitt (6) und dem nachgeordneten Führungsbahnabschnitt (7) zumindest annähernd konstant gehalten ist.

20. Verfahren nach einem der Ansprüche 16 bis 19, **dadurch gekennzeichnet, dass** die Antriebsgeschwindigkeit des Antriebsorgans (16) beim Einkoppeln des vorderen inneren Führungselements (19) im Einlaufbereich (40) so gesteuert wird, dass die Führungsgeschwindigkeit (50) des Antriebsorgans (16) im Einkoppelpunkt (47) größer ist als die auf die Drehachse (9) bezogene Tangentialkomponente (56) der Absolutgeschwindigkeit (49) des Führungselements (19) und (dadurch) die Führungsfläche (17) bzw. Führungsnut (43) ausgehend vom Einkoppelungspunkt (47) bezogen auf eine zur Drehachse (9) weisende Radialrichtung (57) entgegen der Förderrichtung (10) nach hinten geneigt ist und/oder die Antriebsgeschwindigkeit des Antriebsorgans (16) beim Auskoppeln des hinteren inneren Führungselements (20) im Auslaufbereich (42) so gesteuert wird, dass die Führungsgeschwindigkeit (50') des Antriebsorgans (16) im Auskoppelpunkt (55) größer ist als die auf die Drehachse (9) bezogene Tangentialkomponente (56) der Absolutgeschwindigkeit (49') des Führungselements (20) und die Führungsfläche (18) bzw. Führungsnut (44) ausgehend vom Auskoppelpunkt (55) bezogen auf eine zur Drehachse (9) weisende Radialrichtung (57) in Förderrichtung (10) nach vorne geneigt ist.

21. Verfahren nach einem der Ansprüche 16 bis 20, **dadurch gekennzeichnet, dass** die Antriebsgeschwindigkeit des Antriebsorgans (16) beim Auskoppeln des Lastträgers (2) nach einem Verlauf (64, 65) gesteuert wird, der zeitlich gespiegelt dem Verlauf (64, 65) beim Einkoppeln des Lastträgers (2) entspricht.

22. Verfahren nach einem der Ansprüche 16 bis 21, **dadurch gekennzeichnet, dass** das Antriebsorgan (16) während des Durchförderns eines Lastträgers (2) durch den Umlenkabschnitt (8) mittels einer Steuervorrichtung (22) so gesteuert wird, dass der Schwerpunkt des Lastträgers (2) zumindest annähernd eine konstante Bahngeschwindigkeit aufweist und/oder eine maximale vorgebbare Beschleunigung nicht überschreitet.

## Claims

1. Conveyor system (1) comprising a guide track (3) with a deflection section (8) extending in an arcuate shape about an axis of rotation (9), having at least one load bearer (2) having guide elements (4), in particular four guide rollers (5), which can be displaced along the guide track (3) and is guided transversely to the guide track (3), and two guide elements (13, 14) of the load bearer (2) spaced apart from one another in the conveying direction (10) are guided by an arcuately curved, stationary outer guide surface (12) of the guide track (3) in the deflection section (8), and a drive element (16), which is disc-shaped in particular and pivotable or rotatable about the axis of rotation (9), coupled with a drive motor (21) connected to a control device (22) for driving the load bearer (2) in the deflection section (8), **characterised in that** the drive element (16) has at least two guide surfaces (17, 18) spaced at a distance apart from one another which, in the deflection section (8), sit in a positively acting and driving engagement with two inner guide elements (19, 20) of the load bearer (2) closer to the axis of rotation (9) which are spaced at a distance apart from one another and disposed opposite the outer guide elements (13, 14).

2. Conveyor system (1) as claimed in claim 1, **characterised in that** the load bearer (2) is guided in the deflection section (8) transversely to its displacement track by only the stationary outer guide surface (12) acting on the outer guide elements (13, 14) and by the guide surfaces (17, 18) of the drive element (16) acting on the inner guide elements (19, 20).

3. Conveyor system (1) as claimed in claim 1 or 2, **characterised in that** the guide surfaces (17, 18) on the drive element (16) are provided in the form 9 of linking-type guide grooves (43, 44) receiving the guide elements (19, 20), and the inner guide elements (19, 20) move into the guide groove (43, 44) at a coupling-in point (47, 54) upstream of the deflection section (8) as they travel along their displacement track (25) and move out of the guide groove (43, 44) at a coupling-out point (48, 55) downstream of the deflection section (8).

4. Conveyor system (1) as claimed in claim 3, **characterised in that** the coupling-in point (47, 54) and coupling-out point (48, 55) of a guide element (19, 20) on a guide groove (43, 44) coincide, as a result of which the guide element (19, 20) travels through the guide groove (43, 44) in two directions.

5. Conveyor system (1) as claimed in claim 3, **characterised in that** the coupling-in point (47, 54) and coupling-out point (48, 55) of a guide element (19, 20) on a guide groove (43, 44) are spaced at a distance apart from one another and the guide groove (43, 44) has a constant path in between, as a result of which the guide element (19, 20) travels through the guide groove (43, 44) essentially in one direction.

6. Conveyor system (1) as claimed in one of the preceding claims, **characterised in that** an upstream guide track section (6) extending in a straight line opens into the deflection section (8) at a tangent and/or a downstream guide track portion (7) extending in a straight line adjoins the deflection section (8) at a tangent.

7. Conveyor system (1) as claimed in one of the preceding claims, **characterised in that** the load bearer (2) positively engages with a first drive (30) in the upstream guide track section (6) and in an intake region (40) of the deflection section (8) and/or with a second drive (31) in an exit region (42) of the deflection section (8) and a downstream guide track section (7).

8. Conveyor system (1) as claimed in one of the preceding claims, **characterised in that** the load bearer (2) has two front guide elements (13, 19) spaced at a distance apart from one another transversely to the conveying direction (10) and two rear guide elements (14, 20) spaced at a distance apart from one another transversely to the conveying direction (10) disposed in a rectangular, in particular square, arrangement.

9. Conveyor system (1) as claimed in one of the preceding claims, **characterised in that** the guide track (3) comprises at least two guide rails spaced at a distance apart from one another in at least certain sections outside the deflection section (8), in particular with straight guide surfaces (11), for transversely guiding the inner guide elements (19, 20) on the one hand and the outer guide elements (13, 14) on the other hand.

10. Conveyor system (1) as claimed in one of the preceding claims, **characterised in that** the drive element (16) extends approximately as far as the middle between the displacement tracks (24) of the outer guide elements (13, 14) and the displacement tracks (25) of the inner guide elements (19, 20).

11. Conveyor system (1) as claimed in one of the preceding claims, **characterised in that** the drive element (16) coupled with the drive motor (21) connected to a control device (22) constitutes a programmable shaft (23) for effecting a controlled movement of the load bearer (2) and the drive motor (21) can be regulated by means of the control device (22) in terms of its speed curve and is coupled with the upstream first drive (30) and/or the downstream second drive (31) in such a way that the speeds imparted to the load bearer (2) by the drive element (16) in the intake region (40) and in the exit region (42) coincide with the first drive (30) and with the second drive (31).

12. Conveyor system (1) as claimed in one of the preceding claims, **characterised in that** the outer guide elements (13, 14) and the inner guide elements (19, 20) are disposed symmetrically in mirror image relative to a reference plane (62) on the load bearer (2) disposed at a right angle to the conveying direction, and the guide surface (17) respectively guide groove (43) for the front inner guide element (19) by reference to the conveying direction and the guide surface (18) respectively guide groove (44) for the rear inner guide element (20) are disposed symmetrically in mirror image relative to a reference plane (29) on the drive element (16) extending through the axis of rotation (9).

13. Conveyor system (1) as claimed in one of the preceding claims, **characterised in that** the guide grooves (43, 44) conform to a curve matching the respective direction of the relative speed (51) between the absolute speed (49) of the guide element (19, 20) of the load bearer (2) moved at a predefined, in particular constant, speed and the guiding speed (50) of the moved drive element (16).

14. Conveyor system (1) as claimed in one of the preceding claims, **characterised in that** the guide surfaces (17, 18) respectively guide grooves (43, 44) conform to a curve such that, whilst the guide elements (19, 29) are engaging with the guide surfaces (17, 18) or in the guide grooves (43, 44) on the drive element (16), their direction relative to the displacement track (25) of the inner guide element (19, 20) engaged therewith on at least one of the guide surfaces (17, 18) or guide grooves (43, 44) assumes an angle (26) corresponding to at least 1.5-times the angle of static friction of the effective material pairing between the guide surface (17, 18) and guide element (19, 20).

15. Conveyor system (1) as claimed in one of the preceding claims, **characterised in that** the shape of the effective part-section of the guide surfaces (17, 18) and guide grooves (43, 44) as they travel through the deflection section (8) is that of a quarter circle.

16. Method of guiding and driving as well as selectively positioning a load bearer (2) with guide elements (4), in particular guide rollers (5), in a deflection section (8) of a guide track (3) extending in an arcuate shape about an axis of rotation (9), whereby two guide elements (13, 14) of the load bearer (2) spaced apart from one another in the conveying direction (10) are guided by an arcuately curved, stationary, outer guide surface (12) in the deflection section (8), and a drive element (16) is provided, which is disc-shaped in particular and pivotable or rotatable about the axis of rotation (9), coupled with a drive motor (21) connected to a control device (22) for driving the load bearer (2), **characterised in that**, in the deflection section (8), two inner guide surfaces (17, 18) of the load bearer (2) closer to the axis of rotation (9) spaced at a distance apart from one another and disposed opposite the outer guide elements (13, 14) sit in a positive engagement with two guide surfaces (17, 18) of the drive element (16) spaced at a distance apart from one another so that the load bearer (2) is driven and selectively positioned in the deflection section (8).

17. Method as claimed in claim 16, **characterised in that** the load bearer (2) is conveyed by means of a positively acting first drive (30) from an upstream guide track portion (6), in particular extending in a straight line, into the tangentially adjoining deflection section (8), and by means of a positively acting second drive (31) out of the deflection section (8) into a tangentially disposed downstream guide track section (7), in particular extending in a straight line.

18. Method as claimed in claim 17, **characterised in that**, in an intake region (40) at the start of the deflection section (8), the first drive (30) sits in a positive engagement with the load carrier (2) at the same time as the front guide surface (17) of the drive element (16) as viewed in the conveying direction sits in a positive engagement with the front inner guide element (19) and/or in an exit region (42) at the end of the deflection section (8), the rear guide surface (18) of the drive element (16) as viewed in the conveying direction sits in a positive engagement with the rear inner guide element (20) at the same time as the second drive (31) sits in a positive engagement with the load carrier (2).

19. Method as claimed in claim 17 or 18, **characterised in that** the driving speed of the drive element (16) whilst a load bearer (2) is being conveyed through the deflection section (8) is controlled by the control device (22) so that the conveying speed of the load bearer (2) is maintained at least more or less constant between the upstream guide track portion (6) and the downstream guide track portion (7).

20. Method as claimed in one of claims 16 to 19, **characterised in that** the driving speed of the drive element (16) whilst coupling in the front inner guide element (19) in the intake region (40) is controlled so that the guiding speed (50) of the drive element (16) at the coupling-in point (47) is higher than the tangential component (56) of the absolute speed (49) of the guide element (19) relative to the axis of rotation (9) and (hence) the guide surface (17) respectively guide groove (43) is inclined towards the rear opposite the conveying direction starting from the coupling-in point (47) relative to a radial direction (57) pointing towards the axis of rotation (9), and/or the driving speed of the drive element (16) whilst the rear inner guide element (20) is being uncoupled in the exit region (42) is controlled so that the guiding speed (50') of the drive element (16) at the coupling-out point (55) is higher than the tangential component (56) of the absolute speed (49') of the guide element (20) relative to the axis of rotation (9), and the guide surface (18) respectively guide groove (44) is inclined forwards in the conveying direction (10) starting from the coupling-out point (55) relative to a radial direction (57) pointing towards the axis of rotation (9).

21. Method a claimed in one of claims 16 to 20, **characterised in that** the driving speed of the drive element (16) as the load bearer (2) is coupled out is controlled on the basis of a curve (64, 65) which corresponds in terms of timing to the curve (64, 65) when the load bearer (2) is being coupled in.

22. Method as claimed in one of claims 16 to 21, **characterised in that**, when conveying a load bearer (2) through the deflection section (8), the drive element (16) is controlled by means of a control device (22) so that the centre of gravity of the load bearer (2) has an at least approximately constant track speed and/or does not exceed a maximum pre-definable acceleration.

## Revendications

1. Système de transport (1) comprenant une glissière de guidage (3) avec une section de retournement (8) s'étendant en forme d'arc de cercle autour d'un axe de rotation (9) et un porte-charges (2) présentant au moins un élément de guidage (4), en particulier quatre galets de guidage (5), pouvant être déplacé le long de la glissière de guidage et guidé transversalement par rapport à la glissière de guidage (3), dans lequel deux éléments de guidage (13, 14) du porte-charges (2) situés à distance l'un de l'autre dans la direction de transport (10) sont guidés dans la section de retournement (8) par une surface de guidage extérieure (12) stationnaire, courbée en forme d'arc de cercle, de la glissière de guidage (3), ainsi qu'un organe d'entraînement (16), en particulier en forme de disque, couplé à un moteur d'entraînement (21) relié à un dispositif de commande (22) et pouvant pivoter ou tourner autour de l'axe de rotation (9) destiné à entraîner le porte-charges (2) dans la section de retournement (8), **caractérisé en ce que** l'organe d'entraînement (16) comprend au moins deux surfaces de guidage (17, 18) situées à distance l'une de l'autre, qui s'engagent par fermeture géométrique et en produisant un entraînement avec deux éléments de guidage intérieurs (19, 20) du porte-charges (2) situés à distance l'un de l'autre et agencés plus près de l'axe de rotation (9) par rapport aux éléments de guidage extérieurs (13, 14).

2. Système de transport (1) selon la revendication 1, **caractérisé en ce que** le porte-charges (2) est guidé dans la section de retournement (8), transversalement par rapport à sa glissière de déplacement, uniquement par la surface de guidage extérieure (12) stationnaire agissant sur les éléments de guidage extérieurs (13, 14) et par les surfaces de guidage (17, 18) de l'organe d'entraînement (16) agissant sur les éléments de guidage intérieurs (19, 20).

3. Système de transport (1) selon la revendication 1 ou 2, **caractérisé en ce que** les surfaces de guidage (17, 18) sur l'organe d'entraînement (16) sont formées par des rainures de guidage (43, 44) similaires à des coulisses recevant les éléments de guidage (19, 20), étant entendu que les éléments de guidage intérieurs (19, 20), lorsqu'ils circulent sur leur glissière de déplacement (25), entrent dans la rainure de guidage (43, 44) avant la section de retournement (8) à un point de couplage (47, 54) et sortent de la rainure de guidage (43, 44) après la section de retournement (8) à un point de découplage (48, 55).

4. Système de transport (1) selon la revendication 3, **caractérisé en ce que** le point de couplage (47, 54) et le point de découplage (48, 55) d'un élément de guidage (19, 20) coïncident dans une rainure de guidage (43, 44), de sorte que la rainure de guidage (43, 44) est traversée par l'élément de guidage (19, 20) dans deux directions.

5. Système de transport (1) selon la revendication 3, **caractérisé en ce que** le point de couplage (47, 54) et le point de découplage (48, 55) d'un élément de guidage (19, 20) sont écartés l'un de l'autre dans une rainure de guidage (43, 44) et la rainure de guidage (43, 44) présente une trajectoire constante entre ces points, de sorte que la rainure de guidage (43, 44) est principalement traversée par l'élément de guidage (19, 20) dans une direction.

6. Système de transport (1) selon l'une quelconque des revendications précédentes, **caractérisé en ce qu'**une section (6) de la glissière de guidage s'étendant en ligne droite en amont débouche de façon tangentielle dans la section de retournement (8) et/ou rejoint une section (7) de la glissière de guidage s'étendant en ligne droite en aval dans la section de retournement (8).

7. Système de transport (1) selon l'une quelconque des revendications précédentes, **caractérisé en ce que** le porte-charges (2) s'engage par fermeture géométrique avec un premier entraînement (30) dans la section (6) de la glissière de guidage située en amont et dans une zone d'entrée (40) de la section de retournement (8) et/ou s'engage par fermeture géométrique avec un deuxième entraînement (31) dans une zone de sortie (42) de la section de retournement (8) et une section (7) de la glissière de guidage située en aval.

8. Système de transport (1) selon l'une quelconque des revendications précédentes, **caractérisé en ce que** le porte-charges (2) comprend deux éléments de guidage avant (13, 19) situés à distance l'un de l'autre transversalement par rapport à la direction de transport (10) et deux éléments de guidage arrière (14, 20) situés à distance l'un de l'autre transversalement par rapport à la direction de transport (10) dans un agencement rectangulaire, en particulier carré, entre eux.

9. Système de transport (1) selon l'une quelconque des revendications précédentes, **caractérisé en ce que** la glissière de guidage (3) comprend, en dehors de la section de retournement (8), au moins dans des sections partielles, deux rails de guidage situés à distance l'un de l'autre, en particulier avec des surfaces de guidage rectilignes (11) en vue du guidage transversal, d'une part, des éléments de guidage intérieurs (19, 20), et d'autre part, des éléments de guidage extérieurs (13, 14).

10. Système de transport (1) selon l'une quelconque des revendications précédentes, **caractérisé en ce que** l'organe d'entraînement (16) s'étend environ jusqu'au centre entre les glissières de déplacement (24) des éléments de guidage extérieurs (13, 14) et les glissières de déplacement (25) des éléments de guidage intérieurs (19, 20).

11. Système de transport (1) selon l'une quelconque des revendications précédentes, **caractérisé en ce que** l'organe d'entraînement (16) couplé avec le moteur d'entraînement (21) relié à un dispositif de commande (22) forme un axe programmable (23) par rapport au déplacement commandé du porte-charges (2) et **en ce que** le moteur d'entraînement (21) est réglable au niveau de sa vitesse de rotation au moyen du dispositif de commande (22) et est couplé avec le premier entraînement (30) situé en amont et/ou le deuxième entraînement (31) situé en aval de telle sorte que les vitesses réalisées par l'organe d'entraînement (16) au niveau du porte-charges (2) dans la zone d'entrée (40) et dans la zone de sortie (42) coïncident avec le premier entraînement (30) et avec le deuxième entraînement (31).

12. Système de transport (1) selon l'une quelconque des revendications précédentes, **caractérisé en ce que** les éléments de guidage extérieurs (13, 14) et les éléments de guidage intérieurs (19, 20) sont agencés dans une symétrie en miroir par rapport à un plan de référence (62) pris perpendiculairement à la direction de transport au niveau du porte-charges (2) et la surface de guidage (17) ou la rainure de guidage (43) pour l'élément de guidage intérieur avant (19) par rapport à la direction de transport et la surface de guidage (18) ou la rainure de guidage (44) pour l'élément de guidage intérieur arrière (20) sont agencées dans une symétrie en miroir par rapport à un plan de référence (29) s'étendant à travers l'axe de rotation (9) sur l'organe d'entraînement (16).

13. Système de transport (1) selon l'une quelconque des revendications précédentes, **caractérisé en ce que** les rainures de guidage (43, 44) présentent une trajectoire qui coïncide avec la direction respective de la vitesse relative (51) entre la vitesse absolue (49) de l'élément de guidage (19, 20) du porte-charges (2) déplacé à une vitesse prédéterminée, en particulier constante, et la vitesse de guidage (50) de l'organe d'entraînement (16) mis en mouvement.

14. Système de transport (1) selon l'une quelconque des revendications précédentes, **caractérisé en ce que** les surfaces de guidage (17, 18) ou les rainures de guidage (43, 44) présentent une trajectoire telle que pendant l'engagement des éléments de guidage (19, 29) avec les surfaces de guidage (17, 18) ou dans les rainures de guidage (43, 44) sur l'organe d'entraînement (16), leur direction par rapport à la glissière de déplacement (25) de l'élément de guidage intérieur (19, 20) en engagement avec elle, au moins au niveau d'une des surfaces de guidage (17, 18) ou des rainures de guidage (43, 44), adopte un angle (26) qui correspond au moins à 1,5 fois l'angle de frottement par adhérence de l'appariement de matériaux opérationnel entre la surface de guidage (17, 18) et l'élément de guidage (19, 20).

15. Système de transport (1) selon l'une quelconque des revendications précédentes, **caractérisé en ce que** la section partielle des surfaces de guidage (17, 18) ou des rainures de guidage (43, 44) opérationnelle lors du passage de la section de retournement (8) présente la forme d'un quart de cercle.

16. Procédé de guidage et d'entraînement ainsi que de positionnement au choix d'un porte-charges (2) comprenant des éléments de guidage (4), en particulier des galets de guidage (5), dans une section de retournement (8) d'une glissière de guidage (3) s'étendant en forme d'arc de cercle autour d'un axe de rotation (9), dans lequel dans la section de retournement (8), deux éléments de guidage (13, 14) du porte-charges (2) situés à distance l'un de l'autre dans la direction de déplacement (10) sont guidés par une surface de guidage extérieure (12) stationnaire coudée en forme d'arc de cercle et un organe d'entraînement (16), en particulier en forme de disque, couplé à un moteur d'entraînement (21) relié à un dispositif de commande (22) et pouvant pivoter ou tourner autour de l'axe de rotation (9) est prévu afin d'entraîner le porte-charges (2), **caractérisé en ce que** dans la section de retournement (8), deux éléments de guidage intérieurs (19, 20) du porte-charges (2) situés à distance l'un de l'autre et agencés plus près de l'axe de rotation (9) par rapport aux éléments de guidage extérieurs (13, 14) s'engagent par fermeture géométrique avec deux surfaces de guidage (17, 18) de l'organe d'entraînement (16) situées à distance l'un de l'autre, et de cette manière, le porte-charges (2) est entraîné et positionné au choix dans la section de retournement (8).

17. Procédé selon la revendication 16, **caractérisé en ce que** le porte-charges (2) est transporté au moyen d'un premier entraînement à fermeture géométrique (30) depuis une section (6) de la glissière de guidage située en amont, en particulier s'étendant en ligne droite, à l'intérieur de la section de retournement (8) lui faisant suite de façon tangentielle et au moyen d'un deuxième entraînement à fermeture géométrique (31) à l'extérieur de la section de retournement (8) dans une section (7) de la glissière de guidage lui faisant suite de façon tangentielle, en particulier s'étendant en ligne droite.

18. Procédé selon la revendication 17, **caractérisé en ce que** dans une zone d'entrée (40) au début de la section de retournement (8), le premier entraînement (30) s'engage par fermeture géométrique avec le porte-charges, ainsi qu'en même temps, la surface de guidage avant (17) de l'organe d'entraînement (16), considérée dans la direction de transport, avec l'élément de guidage intérieur avant (19) et/ou dans une zone de sortie (42) à la fin de la section de retournement (8), la surface de guidage arrière (18) de l'organe d'entraînement (16), considérée dans la direction de transport, et le deuxième entraînement (31) s'engagent en même temps par fermeture géométrique avec le porte-charges (2).

19. Procédé selon la revendication 17 ou 18, **caractérisé en ce que** la vitesse d'entraînement de l'organe d'entraînement (16) pendant le transport d'un porte-charges (2) à travers la section de retournement (8) est commandée au moyen du dispositif de commande (22) de telle sorte que la vitesse de transport du porte-charges (2) entre la section (6) de la glissière de guidage située en amont et la section (7) de la glissière de transport située en aval est maintenue au moins sensiblement constante.

20. Procédé selon l'une quelconque des revendications 16 à 19, **caractérisé en ce que** la vitesse d'entraînement de l'organe d'entraînement (16) lors du couplage de l'élément de guidage intérieur avant (19) dans la zone d'entrée (40) est commandée de telle sorte que la vitesse de guidage (50) de l'organe d'entraînement (16) au point de couplage (47) est supérieure à la composante tangentielle (56) par rapport à l'axe de rotation (9) de la vitesse absolue (49) de l'élément de guidage (19) et (de cette manière) la surface de guidage (17) ou la rainure de guidage (43) est inclinée vers l'arrière à l'inverse de la direction de transport (10) à partir du point de couplage (47) par rapport à une direction radiale (57) menant à l'axe de rotation (9) et/ou la vitesse d'entraînement de l'organe d'entraînement (16) lors du découplage de l'élément de guidage intérieur arrière (20) dans la zone de sortie (42) est commandée de telle sorte que la vitesse de guidage (50') de l'organe d'entraînement (16) au point de découplage (55) est supérieure à la composante tangentielle (56) par rapport à l'axe de rotation (9) de la vitesse absolue (49') de l'élément de guidage (20) et la surface de guidage (18) ou la rainure de guidage (44) est inclinée vers l'avant dans la direction de transport (10) à partir du point de découplage (55) par rapport à une direction radiale (57) menant à l'axe de rotation (9).

21. Procédé selon l'une quelconque des revendications 16 à 20, **caractérisé en ce que** la vitesse d'entraînement de l'organe d'entraînement (16) lors du découplage du porte-charges (2) est commandée après un trajet (64, 65) qui correspond en miroir dans le temps au trajet (64, 65) lors du couplage du porte-charges (2).

22. Procédé selon l'une quelconque des revendications 16 à 21, **caractérisé en ce que** pendant le passage d'un porte-charges (2) à travers la section de retournement (8), l'organe d'entraînement (16) est commandé au moyen d'un dispositif de commande (22) de telle sorte que le centre de gravité du porte-charges (2) présente au moins sensiblement une vitesse constante et/ou ne dépasse pas une accélération maximale pouvant être prédéterminée.
